## Europäisches Patentamt

## European Patent Office

## Office européen des brevets

(19)

(11) Veröffentlichungsnummer: **0 007 079**
**B1**

(12)

# EUROPÄISCHE PATENTSCHRIFT

(45) Veröffentlichungstag der Patentschrift:
28.07.82

(21) Anmeldenummer: 79102311.2

(22) Anmeldetag: 09.07.79

(51) Int. Cl.³: **G 01 B 11/24**, B 27 B 31/06

---

(54) Verfahren und Vorrichtung zum Abtasten und Vermessen langgestreckter unregelmässiger Werkstücke wie Bretter.

---

(30) Priorität: 10.07.78 SE 7807659

(43) Veröffentlichungstag der Anmeldung:
23.01.80 Patentblatt 80/2

(45) Bekanntmachung des Hinweises auf die Patenterteilung:
28.07.82 Patentblatt 82/30

(84) Benannte Vertragsstaaten:
AT CH DE FR SE

(56) Entgegenhaltungen:
DE-A-2 843 257
US-A-3 137 756
US-A-3 886 372
US-A-3 890 509
US-A-3 963 938
US-A-3 963 403
US-A-4 056 496
US-A-4 105 925
US-A-4 123 169

(73) Patentinhaber: SAAB-SCANIA AKTIEBOLAG, Fack,
S-581 88 Linköping (SE)

(72) Erfinder: Sjödin, Bo, S-55 101 Jöngköping (SE)

(74) Vertreter: Schöning, Hans-Werner, Dipl.-Ing.,
Adenauerallee 28 (Postfach 102 905),
D-2000 Hamburg 1 (DE)

# Verfahren und Vorrichtung zum Abtasten und Vermessen langgestreckter, unregelmässiger Werkstücke wie Bretter

Gebiet der Erfindung:

Die Erfindung betrifft ein Verfahren und eine Vorrichtung zum photoelektrischen Abtasten und Vermessen unregelmässiger Werkstücke gemäss den Oberbegriffen der Ansprüche 1 (Verfahren) und 9 (Vorrichtung).

Stand der Technik:

Die US-PS 3 886 372 und 3 983 403 beschreiben Verfahren und Vorrichtungen, auf denen die vorliegende Erfindung aufgebaut ist. Bei solchen Verfahren und Vorrichtungen verwendet man photosensitive Vorrichtungen, mit denen ein Werkstück abgetastet und Signale erzeugt werden, die man in einen Computer einspeisen kann, damit dieser die geometrischen Daten des Werkstückes auswertet.

Ein typisches mit einer solchen Vorrichtung abzutastendes Werkstück ist ein Brett oder ein ähnliches unbearbeitetes Holzstück mit mindestens einer Oberfläche, die mit einem Sägeschnitt flach abgearbeitet ist und mindestens eine Kantenfläche aufweist, die schräg zum Sägeschnitt verläuft und bei der Endbearbeitung abgeschnitten werden soll. Die durch das Abtasten erhaltene Information verwendet man zur Errechnung der Besäumschnitte, mit denen das spezielle Roh-Werkstück unter Berücksichtigung der Marktbedingungen und der Rohabmessungen, in ein fertiges Brett verwandelt wird, welches den grössten erzielbaren wirtschaftlichen Wert hat. Die optimierenden Berechnungen können mit bekannten programmierbaren Datenverarbeitungseinrichtungen durchgeführt werden. Die Genauigkeit der mit solchen Einrichtungen erzielten Ergebnisse hängt notwendigerweise von der Genauigkeit und der Vollständigkeit der eingespeisten Daten ab.

Bei älteren vorbekannten Systemen für die automatische Vermessung von Brettern und ähnlichen unbearbeiteten Holzstücken wird genau wie beim erfindungsgemässen System eine Reihe von photosensitiven Detektoren verwendet, die langgestreckte Werkstückzonen abtasten, die sich quer zu der Richtung erstrecken, in der die einzelnen Detektorelemente aufeinander ausgerichtet sind. Das Abtasten geschieht durch eine beliebig erzeugte Relativbewegung zwischen der Detektoranordnung und dem Werkstück. So offenbart die an zweiter Stelle genannte USA-Patentschrift den Vorschlag, die Reihe von Detektoren zu bewegen und das Werkstück stationär zu halten oder das Werkstück an einer stationären Detektoranordnung vorbeizubewegen. Gemäss der erstgenannten USA-Patentschrift wird ein schwenkender oder rotierender Spiegel im Lichtpfad zwischen Werkstück und Detektoranordnung verwendet, um die aufeinanderfolgenden Teile eines stationären Werkstückes bei der Verschwenkung des Spiegels auf einer stationären Detektoranordnung abzubilden. Die Bewegung der Detektoranordnung ist bei einem schnellen Abtastvorgang unbefriedigend wegen der Massenträgheit und der erforderlichen Kabelverbindungen. Die Verwendung eines Schwenkspiegels führt zu mechanischen Konstruktionsschwierigkeiten und vergrössert die Gefahr von Messfehlern. Ältere Systeme, bei denen das Werkstück während des Abtastens bewegt wird, arbeiten langsam und ungenau.

Unabhängig von der gewählten Abtastart des Werkstückes war es bisher immer erforderlich, das Werkstück so zu beleuchten, dass stets eine der zwei schrägen Kantenflächen während eines Teils des Abtastvorganges relativ abgeschattet wurde. Gemäss der Lehre der US-PS 3 890 509 geschah diese Abschattung dadurch, dass man das Werkstück wechselweise mit einer von zwei vorhandenen Lichtquellen beleuchtete, die das Licht schräg über die Oberfläche des Werkstückes unter entgegengesetzt gerichteten, flachen Winkeln einfallen liessen. Bei einer solchen Anordnung führt die Beleuchtung mit der einen Lichtquelle dazu, dass die von der Lichtquelle abgelegene Schrägfläche oder Kante in den Schatten kommt, so dass ein relativ plötzlicher Abfall der Ausgangssignalgrösse an allen Photodetektorelementen auftrat, wenn die Abtastung den Bereich der abgeschatteten Schrägfläche oder Kante erreichte.

Bei diesen älteren Lichtstrahl-Abtastsystemen wurde das Werkstück entweder zweimal abgetastet – jeweils eine Bestrahlung aus jeder der beiden Lichtquellen – oder aber es wurde die Beleuchtung immer dann geändert, wenn die Abtastung die Hälfte des Werkstückes überschritten hatte. Bei der Verwendung von zwei Abtastvorrichtungen muss das Werkstück bei der Abtastung stationär bleiben, so dass sich eine geringe Verarbeitungsgeschwindigkeit ergibt. Dagegen zeichnet sich ein System mit nur einer Abtastung durch eine zu geringe Genauigkeit aus.

Bei den älteren Systemen ist es möglich, mit der Photodetektoren-Gruppe Ausgangssignale zu gewinnen, die die Lage der Kanten oder Schrägflächen des Werkstückes definieren. Es ergibt sich dort aber keinerlei Information bezüglich der Werkstückgeometrie und -form. Wenn eine abgetastete Werkstückoberfläche über deren Breite erheblich gekrümmt verlief, brachten die Abtastausgangssignale keinerlei Information über eine solche Krümmung.

Ältere Abtastsysteme, bei denen das Werkstück während der Abtastung an der Messstation stationär gehalten werden muss, benötigen relativ komplizierte Vorrichtungen zum intermittierenden Bewegen und Anhalten der Werkstücke. Nachteiliger war aber vor allem, dass das Anhalten eines Werkstückes an der Messstation merklich den Werkstückdurchlauf entlang der Verarbeitungslinie verlangsamt und dass die Wiederbeschleunigung der Werkstücke hinter der Messstation dazu führen konnte, dass sich die Ausrichtung der Werkstücke änderte, so dass die Messdaten ungenau oder bedeutungslos wurden.

Bei diesen älteren Systemen hielt man es für erforderlich, das Licht oder eine für die Abtastung verwendete unsichtbare Strahlung auf einem im wesentlich konstanten, einer relativ hohen Strahlungsintensität entsprechenden Pegel zu halten, damit die Reflexion von der gesägten Werkstückoberfläche stark gegenüber der Reflexion von der abgeschatteten Kantenfläche kontrastiert und eine ausreichende Änderung des Ausgangssignalpegels erfolgt, um die Kante zwischen den erwähnten Oberflächen genau zu kennzeichnen. Da diese älteren Systeme einen wahrnehmbaren Wechsel beim Betrieb der zwei Lichtquellen erforderten, führte die Verwendung von ständig wechselndem sichtbaren Licht mit hoher Intensität zu einer Ermüdung der Personen, die in der Umgebung der Lichtquellen zu arbeiten hatten. Im übrigen hat eine Bestrahlung mit grosser Intensität auch den Nachteil eines hohen Energieverbrauches.

Bei den vorbekannten Systemen gemäss der US-PS 3 983 403 und 3 963 938 können sich auch Messfehler ergeben, weil die Schrägflächen und die gesägte Oberfläche eines Brettes mit unterschiedlichen Detektorelementen einer sogenannten «Array-Kamera» abgetastet werden. Oft hatten einzelne Elemente des Arrays nicht genau aufeinander abgestimmte Ansprechcharakteristiken, so dass die von einzelnen Detektorelementen erzeugten Signalausgänge mit den Signalausgängen anderer Detektorelemente nicht kompatibel waren. Auch das Driften von Verstärkern konnte die Ausgänge einzelner oder mehrerer Detektorelemente beeinflussen. Solche Ungenauigkeiten der Ausgangssignale und deren Verzerrungen beeinflussen verständlicherweise die Messgenauigkeit des Abtastsystems, sofern keine besondere Kompensation vorgenommen wird. Vorschläge, wie man eine solche Kompensation durchführen kann, gibt es aber bisher noch nicht.

Zusammenfassung der Erfindung:

Die Aufgabe der Erfindung ist die Schaffung eines Verfahrens und einer mit photosensitiven Detektorelementen versehenen Vorrichtung zur Abtastung und Vermessung eines unregelmässigen Werkstückes, wobei sich Ausgangssignale an den verschiedenen Detektorelementen ergeben, die man für eine exakte Berechnung von Profilen oder Oberflächenformen der Werkstücke auch dann verwenden kann, wenn die Abtastung mit bemerkenswerter hoher Geschwindigkeit erfolgt und sich das Werkstück durch die Messzone, in der die Abtastung erfolgt, bewegt.

Dabei soll die Abtastung der Werkstücke mit einer Strahlungsquelle ermöglicht werden, die einen relativ geringen Intensitätspegel hat und stetig strahlt oder den Eindruck einer stetigen Strahlung vermittelt, wobei von den verschiedenen Detektorelementen sehr genaue Messdaten empfangen werden trotz möglicher Drift-Erscheinungen am Verstärker und Unterschieden in der Ansprechcharakteristik der einzelnen Detektorelemente.

Auch soll das erfindungsgemässe Werkstückabtastsystem der vorbeschriebenen Art eine vollständige Information bezüglich der Kontur der abgetasteten Oberfläche oder der Oberflächen des Werkstückes liefern, wobei nicht nur eine Information über die Lage der Kanten zwischen gesägten und schrägen Seitenflächen des Werkstückes, sondern auch über eine Krümmung, die die abgetastete Oberfläche haben kann, gewonnen wird.

Das erfindungsgemässe Abtastsystem der vorbeschriebenen Art soll nicht nur ein Werkstück schneller als bisher abtasten, sondern auch noch den beachtlichen Vorteil haben, dass es eine grössere Menge genauerer Daten des Werkstückes erzeugt, die man für eine vollständige Bestimmung der geometrischen Parameter des Werkstückes und auch für die Auswertung der Qualität (Knoten, Astlöcher, Risse od. dgl.) eines jeden seiner Teile verwenden kann.

Auch soll das erfindungsgemässe Abtastsystem der vorgenannten Art so arbeiten, dass sich eine automatische Kompensation ungleichförmiger Ansprechcharakteristik der einzelnen Detektorelemente einer die Werkstücke abtastenden Array-Kamera und eine Kompensation äusserer Einflüsse, wie beispielsweise Driften der Verstärker, ergibt.

Zusätzlich soll mit dem erfindungsgemässen Abtastsystem auch eine Information über die Schwankungen der Werkstück-Dicke entlang einer Anzahl von streifenförmigen Zonen, die sich über die Breite des Werkstückes erstrecken, gewonnen werden.

Die vorstehende Aufgabe der Erfindung wird bei einem Verfahren und einer Vorrichtung der eingangs genannten Art mit den Verfahrensschritten gemäss dem Kennzeichen des Anspruchs 1 sowie den Vorrichtungsmerkmalen gemäss dem Kennzeichen des Anspruchs 9 gelöst.

Zwei einander gegenüberliegend angeordnete Strahlungsquellen bestrahlen das Werkstück, damit die von dem Werkstück reflektierte Strahlung von den Detektorelementen des Detektor-Arrays erfasst werden kann. Gemäss der vorliegenden Erfindung entsteht während der Abtastung eines Werkstückes bei jeder Folge von regelmässigen Perioden von im wesentlichen kurzer Zeitdauer ein Zyklussignal. Zwei aufeinanderfolgende Zyklussignale definieren einen Messzyklus und während eines jeden Messzyklus sind alle Detektorelemente, die das Werkstück in ihrem Ansprechfeld haben, wechselweise der Strahlung der einen Strahlungsquelle unter Ausschluss der Strahlung der anderen Strahlungsquelle ausgesetzt, so dass die Detektorelemente in jedem Messzyklus zwei gesonderte Ausgangsmessignale erzeugen, von denen jedes der erfassten Strahlungsintensität der jeweilig wirkenden Strahlungsquelle entspricht. Die Folgen solcher Ausgangsmessignale und die Bestrahlungsintervalle der von jeder Strahlungsquelle kommenden Strahlung bleiben in allen Messzyklen ungeändert. Die Frequenz der Zyklussignale und der zeitliche Abstand der erwähnten Intervalle werden so gesteuert, dass sich eine merkliche Überlappung zwischen den während der Intervalle eines jeden Messzyklus im Ansprechfeld eines Detektorelementes liegenden Flächenteilchen des Werkstückes ergibt. Diese Überlappungsflächen definieren einen bestimmten örtlichen Bereich des Werkstückes. Die erwähnten örtlichen Bereiche aufeinanderfolgender Messzyklen liegen sehr nahe beieinander. Nahe beieinanderliegen soll heissen, dass sie nur einen sehr kleinen Abstand voneinander haben und sich auch überlappen können.

Im Gegensatz zu älteren Abtastsystemen, bei denen die von verschiedenen Strahlungsquellen kommende Strahlung von verschiedenen Flächen eines Werkstückes zu einem Detektorelement reflektiert wurden, ist das erfindungsgemässe System dadurch gekennzeichnet, dass ein Werkstück abtastendes Detektorelement innerhalb eines kurzen Zeitintervalls einer Strahlung ausgesetzt wird, die zu diesem Detektorelement von im wesentlichen ein und demselben kleinen Oberflächenteilchen des Werkstückes reflektiert wird, wobei diese Reflexionen jedoch zunächst von der einen und dann von der anderen von zwei Strahlungsquellen an gegenüberliegenden Seiten der optischen Achse des Detektorelementes hervorgerufen werden.

Gemäss einer Ausführungsform der Erfindung werden die Strahlungsquellen alternativ erregt, so dass jedes Detektorelement in jedem Bestrahlungsintervall die Strahlung der einen Strahlungsquelle unter Ausschluss der Strahlung der anderen Strahlungsquelle erfasst. Bei einer abgewandelten Ausführungsform werden die beiden Strahlungsquellen so betrieben, dass sie stetig mit Wellenlängen strahlen, die sich erheblich voneinander unterscheiden, wobei dann abwechselnd vor dem Detektorelement Filter bewegt werden, die die Strahlung der einen oder anderen Wellenlänge ausschliessen.

Gemäss einer bevorzugten Ausführungsform der Erfindung enthält jeder Messzyklus ein weiteres Intervall, in dem jedes Detektorelement des linearen Detektor-Arrays einer Bezugs-Strahlungsintensität ausgesetzt wird, die erheblich geringer als die Intensität der erfassten Strahlung aus den beiden anderen Strahlungsquellen ist, damit das Detektorelement ein Bezugswertsignal liefern kann. Das von jedem Detektorelement während eines jeden Messzyklus erzeugte Bezugswert-Signal wird innerhalb des gleichen Messzyklus von dem Ausgangsmesssignal des gleichen Detektorelementes subtrahiert, so dass Differenzsignale entstehen, die unabhängig von der Ansprechcharakteristik der einzelnen Detektorelemente unmittelbar miteinander und mit Differenzsignalen anderer Detektorelemente verglichen werden können.

Im Rahmen der Erfindung liegt auch die Erzeugung von Dicken-Signalen, die über Schwankungen der Werkstückdicke in Richtung einer anderen Dimension des Werkstückes Auskunft geben. Diese Dicken-Signale werden während eines weiteren Intervalls eines jeden Messzyklus erzeugt, indem man einen schmalen Strahl – beispielsweise einen Laserstrahl – im wesentlichen in der Ebene der optischen Achsen der Detektorelemente schräg zur Werkstückoberfläche aussendet, so dass die Reflexion des Strahles an der bestrahlten Oberfläche einen Strahlungsfleck bildet, den man mit den Detektorelementen erfassen kann und der dann an einem Detektorelement, das dort seine Erfassungsstelle hat, ein Dicken-Signal erzeugt. Auf diese Weise ist die örtliche Werkstückdicke eine Funktion der speziellen Detektorelemente, welche das Dicken-Signal erzeugen.

Weitere Einzelheiten und Merkmale der Erfindung ergeben sich aus der nachfolgenden ausführlichen Beschreibung und den beigefügten Zeichnungen, in denen bevorzugte Ausführungsformen der Erfindung beispielsweise veranschaulicht sind.

Beschreibung der Zeichnungen:

In den Zeichnungen zeigen:

Fig. 1 eine mehr oder weniger schematische perspektivische Ansicht einer erfindungsgemässen Werkstück-Abtastvorrichtung,

Fig. 2 eine Stirnansicht des in der Messzone liegenden Teils der Abtastvorrichtung,

Fig. 3 eine Seitenansicht der Messzone der erfindungsgemässen Abtastvorrichtung in geringfügig abgewandelter Form,

Fig. 4 eine Schemazeichnung zur Erläuterung der erfindungsgemäss vorgenommenen Dicken-Messung mit Laser-Strahlen.

Fig. 5 ein Blockdiagramm der erfindungsgemässen Signalverarbeitungsvorrichtung,

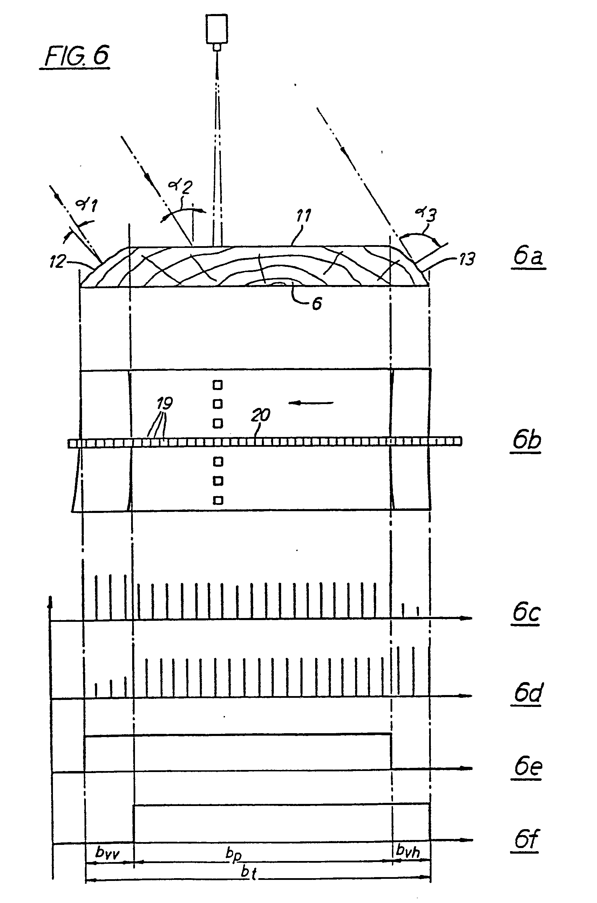

Fig. 6 ein mehrteiliges Diagramm, welches die Bestrahlung und Abtastung eines Werkstückes beim Durchlauf durch die Messzone zeigt und ferner auch die Signale, die von den einzelnen Detektorelementen zu aufeinanderfolgenden Zeitpunkten der Abtastung erzeugt werden gemäss einer Ausführungsform der Erfindung, wobei Fig. 6a in Stirnansicht ein typisches Werkstück in Relation zur Detektorkamera und zur einfallenden Strahlung zu einem Zeitpunkt der Abtastung zeigt, Fig. 6b ein Werkstücksegment in Draufsicht und deren verschiedene Inkrementalflächen, die während der Abtastzeit in aufeinanderfolgenden Messzyklen von einem Detektorelement abgetastet werden, zeigt, Fig. 6c schematisch verschiedene Differenzsignale zeigt, die im Laufe der Abtastung über das Werkstück in jedem Intervall erzeugt werden, in dem das Werkstück von der Vorderseite bestrahlt wird, Fig. 6d ein der Fig. 6c ähnliches Signaldiagramm für Intervalle zeigt, in denen das Werkstück von der Rückseite bestrahlt wird, und Fig. 6e und 6f die integrierten Differenzsignale der Fig. 6c und 6d wiedergeben,

Fig. 7 ein mehrteiliges Diagramm bezüglich der Relation der üblicherweise als Pixel bezeichneten Abtastfelder eines bestimmten Detektorelementes in aufeinanderfolgenden Messzyklen und eine Signaldarstellung, die sich bei einer Abtastung gemäss einer weiteren bevorzugten Ausführungsform der Erfindung ergibt,

Fig. 8 eine schematische Darstellung einer abgewandelten Ausführungsform zur Durchführung der Erfindung mit stetiger Strahlung aus den Strahlungsquellen,

Fig. 9 eine Filterscheibe für die Anordnung der Fig. 8 in schematischer Darstellung,

Fig. 10 ein Wellenlängen-Diagramm der mit der Vorrichtung gemäss Fig. 8 verwendeten Strahlungsquellen zur Erläuterung der Arbeitsweise der Filterscheibe gemäss Fig. 9,

Fig. 11 ein Prinzipschaltbild eines Schaltungsteils zur Durchführung einer zeitlich exakten intermittierenden Einschaltung einer Strahlungsquelle,

Fig. 12 ein Prinzipschaltbild einer abgewandelten Schaltungsanordnung zur Synchronisierung einer intermittierenden Arbeitsweise der Strahlungsquelle,

Fig. 13 eine schematische perspektivische Darstellung zur Erläuterung des für die Laser-Dickenmessung massgeblichen Winkels β und

Fig. 14 eine schematische Darstellung der Relation der Winkel α und β an einem bestimmten Flächenteil der Oberfläche eines in Stirnansicht dargestellten Werkstückes.

Ausführliche Beschreibung einer bevorzugten Ausführungsform der Erfindung:

Wie die Zeichnungen zeigen, werden mit dem schematisch dargestellten Förderer 5 Werkstücke 6, im dargestellten Falle Rohbretter, durch eine Messzone 7 hindurchgefördert, in der jedes einzelne Werkstück entsprechend den Grundgedanken der Erfindung abgetastet wird. Der Förderer 5 kann beliebig ausgebildet sein. Gemäss der Darstellung handelt es sich um endlose Förderantriebe 8, beispielsweise um Förderbänder oder Ketten, die parallel zueinander verlaufende obere Trume haben, die sich in Transportrichtung 9 der Werkstücke 6 erstrecken.

Jedes einzelne Werkstück 6 ruht auf zwei oder mehr endlosen Förderantrieben 8 und erstreckt sich quer zu deren oberen Trumen, so dass die Werkstücke quer zu ihrer Längsrichtung bewegt werden. Für die vorliegende Erfindung ist es erforderlich, dass zwischen benachbarten Werkstücken etwas Platz verbleibt. Dieser Abstand zwischen aufeinanderfolgenden Werkstücken braucht jedoch nicht wesentlich grösser als etwa 200 mm zu sein.

Trotz des erforderlichen Abstandes ist eine hohe Bearbeitungsgeschwindigkeit von beispielsweise 60 Werkstücken je Minute möglich, da gemäss der vorliegenden Erfindung sich die Werkstücke mit einer stetigen und recht hohen Geschwindigkeit von beispielsweise 1,2 m/sec bewegen können, während sie der Messzone 7 zulaufen, diese Messzone durchqueren und aus dieser Messzone wieder abgeführt werden.

Um sicherzustellen, dass die Werkstücke 6 alle Bewegungen des Förderers 5 mitmachen und dabei ihre Ausrichtungen beibehalten und um ferner auch die richtigen Abstände zwischen den Werkstücken auf dem Förderer einzustellen, können an den Förderantrieben 8 in im wesentlichen gleichförmigen Abständen Mitnehmer 10 angebracht sein. Wenn es sich bei den Werkstücken 6 um Rohbretter handelt, werden diese normalerweise so auf den Förderer 5 aufgelegt, dass ihre schmäleren besägten Oberflächen 11 nach oben zeigen, woraus sich ergibt, dass die schrägen Kantenflächen 12, 13 schräg nach oben zeigen.

In der Messzone werden die Werkstücke mittels nachfolgend noch zu beschreibenden Strahlungsquellen 14, 14' beleuchtet und dabei von einer oder mehreren sogenannten Array- oder Detektorkameras 15 abgetastet. Die Strahlungsquellen 14, 14' und die Array-Kameras 15 sind oberhalb des Förderers 5 stationär an einem Träger 16 befestigt, der den Förderer an der Messzone überbrückt.

Jede Array-Kamera 15 in an sich bekannter Ausbildung enthält eine Weitwinkellinse 17, mit der das Bild eines in der Messzone 7 befindlichen Werkstückes 6 auf eine Reihe von photosensitiven Detektorelementen 18 der Kamera fokussiert wird. Eine typische Array-Kamera verwendet als Detektorelemente Photodioden in einem linearen Array- oder Sensorfeld, welches funktionell ein Äquivalent zu einer Reihe von 1024 einzelnen Photozellen ist. Die Linse 17 definiert für jedes Detektorelement eine optische Achse und beschränkt das Ansprechfeld dieses Detektorelementes auf kleine Divergenzwinkel gegenüber der optischen Achse, so dass das Detektorelement nur ein relativ kleines Flächenteilchen 19 der Werkstückoberfläche in der Messzone «sieht». Dieses im allgemeinen als Pixel bezeichnete kleine Flächenteilchen 19 des Werkstückes hat im allgemeinen eine Grösse von etwa 8 × 8 mm einschliesslich der optischen Verzerrung. Die optischen Achsen aller Detektorelemente des Arrays liegen in einer gemeinsamen Ebene 115.

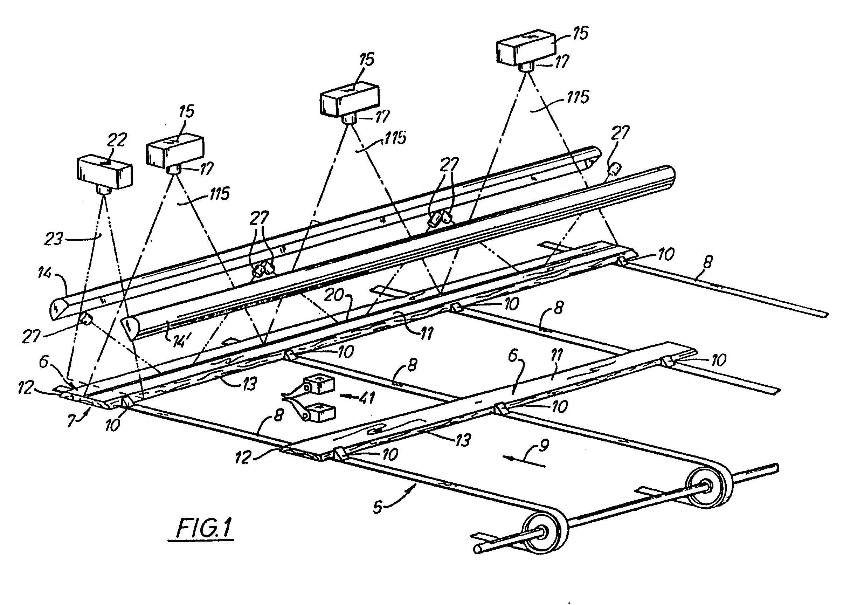

Die Detektorelemente 18 einer jeden Array-Kamera 15 sind quer zur Förderrichtung 9 des Förderers ausgerichtet, d.h. die Detektorelemente liegen in einer Reihe, die der Längsrichtung eines Werkstückes 6 in der Messzone 7 entspricht. Auf diese Weise tastet jedes Detektorelement jedes einzelne durch die Messzone hindurchlaufende Werkstück entlang eines schmalen Streifens 20 ab, der sich über die Werkstückbreite erstreckt. Da zwischen den von benachbarten Detektorelementen abgetasteten Streifen 20 nur geringe Abstände bestehen, um eine hohe Messgenauigkeit zu erhalten, wird man im allgemeinen zwei oder mehr Array-Kameras 15 nebeneinander so anordnen, dass ihre Ansprechfelder an ihren Enden aneinanderstossen und relativ lange Werkstücke behandelt werden können. So zeigt dann auch die Fig. 1 drei Array-Kameras 15 zur Abtastung von Werkstücken bis zu einer Länge von 8 Metern.

Die Grösse der elektrischen Ausgangssignale aus einem Detektorelement 18 entspricht dem Produkt von Intensität und Dauer der Strahlung, welcher das Detektorelement ausgesetzt ist. Gemäss der vorliegenden Erfindung haben die Belichtungs- oder Bestrahlungsintervalle eine gleichförmige kurze Dauer. Für jedes einzelne Intervall hängt die Ausgangsgrösse eines Detektorelementes von der Intensität der Strahlung ab, die von dem im Ansprechfeld liegenden Pixel 19 der Werkstückoberfläche reflektiert wird.

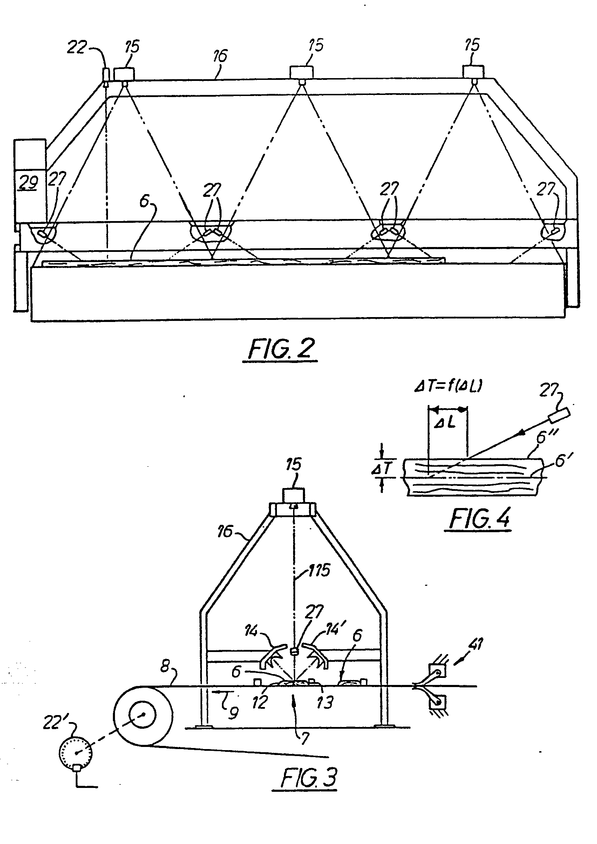

Wie sich aus der späteren Beschreibung noch ergeben wird, ist es erforderlich, dass das Ausgangssignal eines jeden einzelnen Detektorelementes zu jedem beliebigen Zeitpunkt eine Relation hat zu der dann vorhandenen Lage des Werkstückes 6. Dies heisst mit anderen Worten, dass auch eine Information darüber vorhanden sein muss, an welcher Stelle gegenüber der Breite des Werkstückes das Pixel 19 liegt, von dem jedes einzelne Detektorelement eine reflektierte Strahlung erfasst. Zu diesem Zweck dient ein Lageimpulssignal, welches für jedes der gleich grossen Bewegungsinkremente des Werkstückes durch die Messzone 7 erzeugt wird. Lageimpulssignale kann ein photomechanischer Impulsgeber 22' Fig. 3) liefern, der aus einer drehfest mit dem endlosen Förderer 8 gekuppelten geschlitzten Scheibe zwischen einer Lichtquelle und einer Photodiode besteht, welch letztere jedes Mal dann ein Impuls erzeugt, wenn sich der Förderer über einen zuvor festgelegten Weg weiter bewegt hat. Abweichend hiervon kann man auch, wie Fig. 1 zeigt, eine weitere Array-Kamera vorsehen, welche die gewünschten Lagesignale erzeugt. Die Lage-Array-Kamera 22 ist im wesentlichen genau so aufgebaut wie die Array-Kameras 15; es sind hierbei jedoch die Detektorelemente in Förderrichtung 9 ausgerichtet, so dass sich das Ansprechfeld 23 der Kamera 22 quer zur Messzone erstreckt. Die erwünschten Lageinformationen ergeben sich, wenn das Werkstück sich quer zu den Ansprechfeldern der verschiedenen Detektorelemente bewegt.

Jede der Strahlungsquellen 14, 14', welche die Messzone 7 beleuchten, kann eine Gasentladungsröhre enthalten, die mit einem parabolischen Reflektor zusammen arbeitet. Da die Strahlungsquellen 14, 14' sowohl sichtbares wie auch unsichtbares Licht abstrahlen können, wird für den Ausgang der Strahlungsquellen nachfolgend ausschliesslich das Wort «Strahlung» verwendet. Die zwei Strahlungsquellen 14 und 14' liegen oberhalb der Messzone 7 an gegenüberliegenden Seiten der Ebene 115, welche die optischen Achsen der Detektorelemente der Array-Kamera enthält. Auf diese Weise verläuft die Strahlung unter einem spitzen Winkel von beispielsweise 45° gegenüber der Horizontale quer zur Breite eines in dieser Zone befindlichen Werkstückes. Es sei noch erwähnt, dass für die Zwecke der vorliegenden Erfindung die Winkel, unter denen die Strahlung von den Strahlungsquellen 14, 14' abgegeben wird, gegenüber einem Werkstück nicht besonders flach zu verlaufen haben. Vielmehr ist es im Gegensatz zur bisherigen Praxis günstiger, wenn die Strahlungsquellen so hoch liegen, dass normalerweise jede schräge Kantenfläche 12, 13 eines Rohrbrettes von beiden Strahlungsquellen 14, 14' bestrahlt wird.

Bei einer Ausführungsform der Erfindung, zu der nachfolgend noch die Vorrichtungteile näher beschrieben werden, arbeiten die Strahlungsquellen 14, 14' alternativ mit einer relativ hohen Umschaltfrequenz. Bei einer anderen Ausführungsform, die nachfolgend auch noch ausführlicher beschrieben wird, strahlen die Strahlungsquellen 14, 14' ständig, jedoch mit unterschiedlichen Wellenlängen, wobei dann eine Filterscheibe mit dem optischen System der Array-Kameras 15 kombiniert wird, die abwechselnd die Strahlungen jeder einzelnen der verschiedenen Wellenlängen ausfiltert.

Bei beiden Ausführungsformen hat der Ausgang eines jeden Detektorelementes 18 bei der Erfassung einer reflektierten Strahlung eines Werkstückes die Form einer Reihe von kurzen Impulsen. Zu diesen Impulsen gehört ein A-Impuls für jedes kurze Intervall in dem das Detektorelement der Strahlung ausgesetzt ist, die von der vorderen Strahlungsquelle 14 kommt und ferner ein B-Impuls für jedes Intervall, in dem das Detektorelement der Strahlung der hinteren Strahlungsquelle 14' ausgesetzt ist. Ein jedes dieser Belichtungsintervalle kann eine Dauer von einer Millisekunde haben. Die A-Impulse und B-Impulse werden in regelmässiger Folge erzeugt. Ferner werden auch zu regelmässigen Intervallen Takt- oder Zyklussignale erzeugt, die so bemessen sind, dass zwei aufeinanderfolgende Zyklussignale einen Messzyklus definieren, in dem mindestens ein A-Impuls und mindestens ein B-Impuls erzeugt werden. Die Folge von A- und B-Impulsen ist in jedem Messzyklus die gleiche, und selbstverständlich treten die Messzyklen in gleicher Form gleichzeitig bei allen Array-Kameras und bei allen Detektorelementen eines Arrays auf.

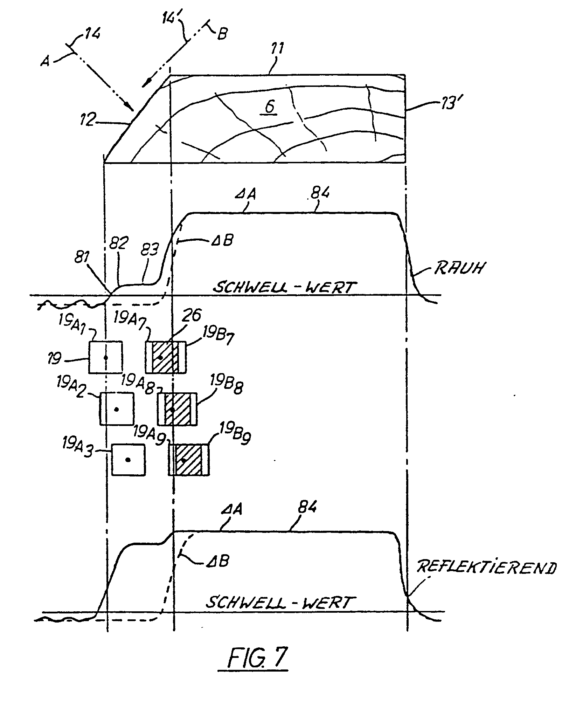

Die Folge und Dauer der Belichtungen bzw. Bestrahlungen, die zu den A- und B-Impulsen führen, werden bezüglich der Geschwindigkeit der Werkstückbewegung durch die Messzone so gesteuert, dass sich das Pixel 19 auf einem Werkstück für irgendein Detektorelement während eines A-Impuls-Intervalls des Messzyklus eine wesentliche Überlappung mit dem Pixel für das gleiche Detektorelement während des B-Impuls-Intervalls des gleichen Messzyklus ergibt. Die in Fig. 7 mit 26 bezeichnete Überlappungsstelle soll nachfolgend als örtliche Überlappungsfläche bezeichnet werden.

Verfahrensmässig verwendet die Erfindung einen iterativen Messzyklus, der während des Durchlaufes eines jeden Werkstückes durch die Messzone viele Male wiederholt wird. Während eines jeden Messzyklus werden von jedem einzelnen Detektorelement, das ein Werkstück im Ansprechfeld hat, mindestens ein A-Impuls und ein B-Impuls erzeugt, wobei jeder dieser Ausgangsimpulse durch Strahlungsreflexion von ein und derselben Überlappungsfläche 26 des Werkstükkes herrührt unter Berücksichtigung der Tatsache, dass die Bestrahlung dieser Überlappungsfläche abwechselnd von zwei Strahlungsquellen 14 und 14' kommt. Die Folge von unterschiedlichen Bestrahlungen erfolgt gleichförmig in allen Messzyklen. Die Dauer der Messzyklen, welche durch die Intervalle zwischen aufeinanderfolgenden Zyklussignalen bestimmt wird, ist ebenfalls stets gleich.

Gemäss einer bevorzugten Ausführungsform der Erfindung besteht jeder Messzyklus – zusätzlich zu mindestens einem A-Signal und mindestens einem B-Signal – aus mindestens einem Signal, welches dadurch erzeugt wird, dass man das Detektorelement einer Strahlung aussetzt, die eine erheblich geringere Intensität hat, als die Strahlung, die für die A-, B-Signale verantwortlich ist. Diese dritte Signalart, die als Bezugspegel dient, sei nachfolgend als R-Signal bezeichnet. Dieses R-Signal hat vorzugsweise die gleiche Dauer (etwa eine Millisekunde) wie jedes der A- und B-Signale.

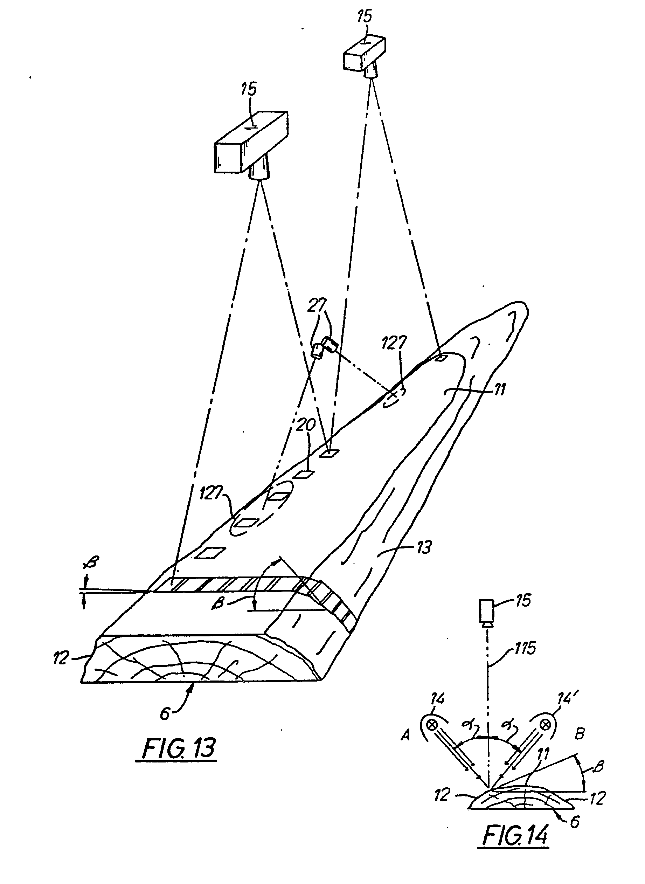

Der Signalpegel der Strahlungsintensität – die gleich Null sein kann – für das R-Signal lässt sich auf verschiedene Weise erzeugen. Beispielsweise können beide Strahlungsquellen 14, 14' während eines jeden Intervalls, in dem das R-Signal erzeugt werden soll, abgeschaltet werden, so dass das R-Signal eine Funktion der Umgebungshelligkeit ist. Es können aber auch beide Strahlungsquellen 14, 14' während des R-Signal-Intervalls mit einem erheblich verminderten Strahlungsintensitätspegel betrieben werden. Gemäss einer noch weiteren abgewandelten Ausführungsform unter Verwendung einer rotierenden Filterscheibe, kann man in dieser Filterscheibe ein Filtersegment anordnen, mit dem die Strahlung gegenüber allen Detektorelementen abgesperrt wird. In allen Fällen ist vorzugsweise für alle Detektorelemente und für alle Messzyklen der Strahlungspegel dem die Detektorelemente während des R-Signal-Intervalls ausgesetzt sind, im wesentlichen gleich. Aus Gründen, die sich noch aus der nachfolgenden Beschreibung ergeben werden, enthält jeder Messzyklus vorzugsweise noch ein viertes Intervall, in dem einzelne der photosensitiven Detektorelemente (eine relativ kleine Zahl von ihnen) ein L-Signal erzeugen aufgrund eines Lichtfleckes 127 (siehe Fig. 13), den eine Laser-Strahlung während des diesem Signal zugeordneten Teils des Messzyklus in deren Ansprechfeld erzeugt. Die die L-Signale erzeugende Strahlung kommt von einem jeden Laser einer Mehrzahl von Lasern 27, die oberhalb der Messzone ausserhalb der Ansprechfelder der Array-Kameras am Rahmen 16 angeordnet sind. Der schmale Strahl, der von jedem Laser 27 ausgesendet wird, liegt in der Ebene 115 der optischen Achsen der Detektorelemente der Array-Kameras 15 und strahlt im wesentlichen in eine Richtung, die längs zu einem in der Messzone befindlichen Werkstück 6 liegt. Der Strahlungseinfallwinkel ist jedoch im wesentlichen klein und hat eine Grösse von beispielsweise 30° gegenüber der Horizontalen. Wie vor allem aus Fig. 4 zu erkennen, ergibt sich eine Relation zwischen der örtlichen inkrementalen Dicke $\Delta T$ des Werkstückes und der projizierten inkrementalen Entfernung $\Delta L$ entlang des Werkstückes zwischen dem vom Laser 27 erzeugten Lichtfleck 127 und dem Laser, der diesen Lichtfleck erzeugt. Handelt es sich um ein dünnes Werkstück 6' ist der Lichtfleck 127 von einem vorgegebenen Laser 27 entlang des Werkstückes weiter vom Laser entfernt als bei einem dicken Werkstück 6''. Die örtliche Dicke eines Werkstückes lässt sich daher trigonometrisch mit Hilfe eines besonderen Detektorelementes bestimmen, welches in Abhängigkeit von einem mittels Laser erzeugten Lichtfleck ein L-Signal aussendet. Die Laser sind vorzugsweise so angeordnet, dass ihre Reflexionsstellen 127 in im wesentlichen gleichförmigen Entfernungen entlang des Werkstückes auseinanderliegen. Es sind daher vorzugsweise zwei Laser für jede Array-Kamera 15 vorgesehen.

Jeder Laser 27 wird vorzugsweise so gepulst, dass er seine Strahlung nur im Intervall eines jeden Messzyklus aussendet, der dem L-Signal zugeordnet ist. Dieses Intervall kann die gleiche Dauer (etwa eine Millisekunde) haben wie die A-, B- und R-Signal-Intervalle. Die bevorzugte Folge der verschiedenartigen Signale während eines Messzyklus ist ein R-Signal zwischen jedem L-Signal und dem unmittelbar nachfolgenden A- oder B-Signal, beispielsweise R-A-B-L oder L-R-A-B. Falls ein A- oder ein B-Signal unmittelbar einem L-Signal folgt, könnte das A- oder B-Signal von den Detektorelementen, die die L-Signale aussenden, aufgrund der hohen Intensität der Laserstrahlung durch Remanenz verzerrt werden. Man kann auch in einem Messzyklus mehrere R-Signale erzeugen, beispielsweise für eine Zyklusfolge A-R-B-R-L-R.

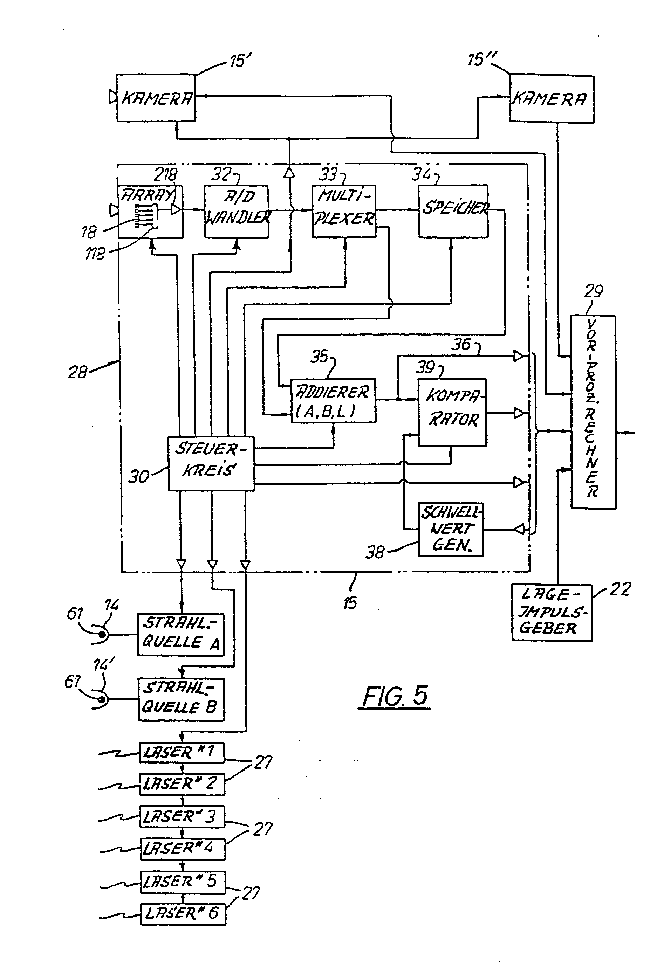

Es soll nun näher auf die Signalverarbeitungsschaltung eingegangen werden, die in Fig. 5 dargestellt ist. Jede Array-Kamera 15 hat eine bestimmte zugeordnete Signalverarbeitungsschaltung 28, die jedoch nur für eine der Array-Kameras im einzelnen dargestellt ist. Verständlicherweise arbeiten die Array-Kameras 15 und ihre Signalverarbeitungsschaltungen parallel zueinander; sie sind aber sämtlich mit einem Vor-Prozessrechner 29 verbunden, der am Rahmen 16 befestigt ist. Von diesem Vor-Prozessrechner 29 gelangen die Signaleingänge in einen nichtdargestellten Computer, der in bekannter Weise arbeitet, um Berechnungen bezüglich der optimalen an jedem Werkstück durchzuführenden Bearbeitungsschnitte durchzuführen. Zu jeder Array-Kamera 15 gehört ein zugehöriger Steuerkreis 30. Einer dieser Steuerkreise 30 kann als Hauptsteuerung dienen, welcher die übrigen Array-Kameras 15', 15'' untergeordnet sind.

Innerhalb einer jeden Array-Kamera 15 ist das zugehörige Photodioden-Array 18 über einen integrierten Kreis mit einem Schieberegister 118 in CCD- oder CCPD-Schaltung gekoppelt. Nach einer jeden Bestrahlung während eines Intervalls von nicht mehr als einigen Mikrosekunden, werden die entsprechenden Ladungen an den 1024 Photodioden der Kamera unter Steuerung einer Taktfrequenz, die der Steuerkreis 30 liefert, parallel in das Schieberegister 118 eingegeben. An den Ausgängen erscheinen Analogsignale. Zum Zwecke der nachfolgenden Verarbeitung werden diese Analogsignale der Reihe nach von Kamera-Schieberegister 118 über einen Verstärker 218 in einen Analog-Digital-Wandler 32 eingegeben. Diese Eingabe wird vom Steuerkreis mit Steuerimpulsen getaktet, deren Frequenz in der Grösse zwischen 1 und 10 mHz liegt.

Wenn der Ausgang jeder einzelnen der 1024 Dioden des Arrays zu verarbeiten wäre, würde die Flut von Informationen eine sehr grosse Speicherkapazität im Vor-Prozessrechner 29 erfordern. Die Praxis zeigt jedoch, dass nicht alle einzelnen Informationen für praktische Zwecke erforderlich sind. Aus diesem Grunde werden die Steuerimpulse dem A/D-Wandler 32 mit einer solchen Frequenz zugeführt, dass nur die Signale von jedem n-ten Detektorelement verarbeitet werden, beispielsweise jedes vierte, achte oder sechzehnte Element, so dass bei einer Pixel-Messauflösung von 2 × 2 mm Messungen mit Intervallen von 8, 16, oder 32 mm entlang der Länge des Werkstückes übernommen werden. Diese Messintervalle kann man den anstehenden Bedingungen entsprechend einregeln, indem man die Steuerimpulsfrequenz verändert. Es versteht sich, dass die Auswahl der zu verarbeitenden und zu verwerfenden Signale in einer nachfolgenden Verarbeitungsstufe vorgenommen werden kann. Es ist jedoch bequemer und wirkungsvoller, diese Auswahl bereits am A/D-Wandler zu treffen.

Die vom A/D-Wandler 32 abgegebenen digitalisierten Signale gelangen in einen Multiplexer 33, der ebenfalls mit dem Steuerkreis 30 gesteuert wird. Der Multiplexer 33 hat zwei Ausgänge, von denen der eine zu einem Kurzzeitspeicher 34 und der andere zu einem Addierer 35 führt. Wenn der Messzyklus entsprechend der vorstehenden Beschreibung aus einer R-A-B-L-Signalfolge besteht, speist der Multiplexer 33 den Speicher 34 mit jedem R-Signal, welches vom A/D-Wandler 32 kommt. Ferner speist der Multiplexer 33 den Addierer 35 der Reihe nach mit den A-, B- und L-Signalen, die während des gleichen Messzyklus vom gleichen Detektorelement kommen. Im Addierer 35 wird mittels der Steuerimpulse aus dem Steuerkreis 30 die Grösse des Bezugssignals R, welches während eines jeden Messzyklus an jedem n-ten Detektorelement erzeugt wird, von den entsprechenden Grössen der A-, B- und L-Signale des gleichen Detektorelementes und des gleichen Messzyklus abgezogen, um Differenzsignale ΔA, ΔB, ΔL für dieses Detektorelement und diesen Messzyklus zu erzeugen. Die «Entleerung» des Schieberegisters über den A/D-Wandler und die Verarbeitung der Signale verläuft über die Ausgänge der Detektorelemente vom einen Ende des Arrays zum anderen Arrayende und führt dann wieder zurück zum Vorderende in einem sich wiederholenden Verarbeitungszyklus.

Alle auf diese Weise erzeugten ΔA-, ΔB-Signale gelangen über eine Verbindung 36 zu einem der Eingänge des Vor-Prozessrechners 29, um in dessen Speicher festgehalten zu werden. Die ΔL-Signale gelangen zur Speicherung ebenfalls in den Vor-Prozessrechner 29, aber erst nachdem diese Signale in nachfolgender Weise noch weiter behandelt wurden.

Parallel zur Einspeisung der ΔA-, ΔB-, ΔL-Signale zum Vor-Prozessrechner-Speicher werden die Lagesignale des Lagesignalgebers 22 in den letzterwähnten Speicher eingegeben, um die Relativlage des Werkstückes festzuhalten.

Jedes einzelne Lagesignal bewirkt, dass die zum gleichen Zeitpunkt erhaltene Gruppe von ΔA-, ΔB- und ΔL-Werten im Vor-Prozessrechner-Speicher auch gespeichert wird. Somit sind die Koordinatenwerte für jede Gruppe von ΔA-, ΔB- und ΔL-Signale bekannt, die während eines Messzyklus von einem bestimmten Detektorelement kommen. Falls zwischen aufeinanderfolgenden Lagesignalen zwei oder mehr dieser Signalgruppen erzeugt werden, lässt man die zwischen den Lagesignalen liegenden Gruppen fortfallen, so dass die Dauer eines Messzyklus kurz und unabhängig von der Geschwindigkeit des Werkstücktransportes sein kann.

Von Messzyklus zu Messzyklus hat sich das Werkstück um einen kleinen Weg, beispielsweise 4 mm, weiterbewegt, so dass bei einer Pixelgrösse von 8 × 8 mm die Überlappungsfläche am Werkstück, aus der ein Detektorelement während eines bestimmten Messzyklus seine Information bezieht nahe bei der Überlappungsfläche liegt, aus der das gleiche Detektorelement während des nächsten nachfolgenden Zyklus die Information empfängt. «Nahebei» soll hier heissen, dass diese Überlappungsflächen sich tatsächlich um einen gewissen Betrag überlappen oder eng aneinandergrenzen oder aber nur um einen sehr geringen Betrag auseinanderliegen.

Es sei an dieser Stelle darauf hingewiesen, dass nach Beendigung der Abtastung eines Werkstückes der Vor-Prozessrechner eine Information gespeichert hat, die in ihrer Gesamtheit eine elektronisch lesbare Sammlung von Daten von Messpunkten – oder genauer gesagt, von Überlappungsflächen – enthält, die gleichförmig quer und längs der abgetasteten Oberfläche des Werkstückes verteilt sind. Es ist erkennbar, dass die «Dichte» der Matrix von Inkrementalflächen, von denen die Information entnommen wird, sich in einfacher Weise steuern lässt, beispielsweise dadurch, dass man die n-ten Detektorelemente, deren Signale zu verarbeiten sind, auswählt und/oder dadurch, dass man zur Verarbeitung die Signale nur jedem zweiten Messzyklus oder nur jedem dritten Messzyklus entnimmt. Mit grösser werdender «Dichte» (kleinere und zahlreichere Inkrementalflächen) erhöht sich in entsprechender Weise die Messgenauigkeit, jedoch auch der Bedarf für Speicherplätze in dem Vor-Prozessrechner-Speicher. Hieraus ergibt sich aber auch eine grössere Schwierigkeit, alle vorhandenen Daten innerhalb der zur Verfügung stehenden Zeit zu verarbeiten. Die Praxis hat gezeigt, dass es für eine Speicherung der ΔA- und ΔB-Werte ausreicht, dass man in 32-mm-Intervallen entlang der Länge des Werkstückes Daten misst bei einem Vorrücken der Abtastebene um 4 mm je Messzyklus und Informationsentnahme bei jedem Messzyklus. Bei einer solchen Auswahl genügt für den Vor-Prozessrechner ein Speicher mit 16 K-Byte. Da der Kurzzeitspeicher 34 für die Dauer eines Messzyklus einen R-Ausgang von jedem der Detektorelemente speichern muss, von dem Ausgänge zu verwenden sind, kann es sich hier um einen Random-Zugriffs-Integrationsspeicher geeigneter Grösse handeln.

Es sei noch daran erinnert, dass von den 1024 Pixeln, die von einer bestimmten Array-Kamera während eines Messzyklus abgetastet werden, nur einige wenige an zwei bestimmten Stellen durch Laserstrahlen beleuchtet werden. An jeder dieser Stellen werden jedoch zwei und mehr Pixel (im allgemeinen drei, gegebenenfalls auch einmal sechs) von der Laserstrahlung getroffen wegen des flachen Einfallswinkels des Laserstrahls und dessen hierdurch bedingte Divergenz gegenüber der Werkstückoberfläche. Es ist somit erforderlich, die Mitte des Laserstrahls zu bestimmen, der für jede Gruppe von L-Signalen verantwortlich ist. Zu diesem Zweck ist die einer jeden Array-Kamera 15 zugeordnete Schaltung 28 mit einem Schwellenwert-Generator 38 vorgesehen, dessen Ausgang eine Grösse hat, die um einen vorzugsweise manuell einstellbaren willkürlichen Betrag über einem Störpegel liegt. Der Ausgang des Schwellenwertgebers 38 wird in einen Komparator 39 eingegeben, der auch aus dem Addierer 35 ΔL-Eingangssignale empfängt. Falls ein ΔL-Signal grösser ist als das Signal aus dem Schwellenwertgeber, sorgt der Komparator 39 dafür, dass tatsächlich das ΔL-Signal angenommen und in dem Vor-Prozessrechner-Speicher gespeichert wird. Falls aber das ΔL-Signal kleiner ist als das Signal des Schwellenwertgeneratorausgangs wird dieses Signal verworfen. Aus den Grössen der gespeicherten ΔL-Signale aus jeder Gruppe von benachbarten Detektorelementen wird das «Massenzentrum» der ΔL-Signalgruppe errechnet, so dass man die Lage der Mitte des Laserstrahls auf der Werkstückoberfläche bestimmen kann. Diese Rechnung wird vorzugsweise in dem Vor-Prozessrechner 29 durchgeführt. Das Ergebnis der Berechnung ist eine spezielle Adresse im Speicher des Vor-Prozessrechners. Da für jeden Abtastzyklus, beispielsweise für jeden Vorschub des Werkstückes um 4 mm mit jedem Laser 27 ein ΔL-Signal erzeugt wird, ist es leicht möglich, eine Reihe von Dicken-Werten zu erhalten, die einem Streifen zugeordnet sind, der sich an jeder einer Mehrzahl von mehr oder weniger gleichmässig entlang der Werkstücklänge verteilten Zonen quer über das Werkstück erstreckt.

Obwohl die gespeicherten Dicken-Werte einen erheblichen Anteil von Daten über das Profil der abgetasteten Oberfläche eines Werkstückes enthalten, sind die ΔL-Signale auf eine willkürlich definierte Bezugsebene bezogen. Aus diesem Grunde können diese Signale nicht genau den Querschnitt des tatsächlichen Werkstückes wiedergeben, da die Bodenfläche des Werkstückes oberhalb oder unterhalb der Bezugsebene oder teils über und teils unter der Bezugsebene liegen kann, wenn das Werkstück gekrümmt ist oder Verwerfungen aufweist.

Aus vorstehenden Gründen werden – sofern nicht alle Werkstücke eine bekannte und gleichmässige Dicke haben – die ΔL-Signalinformationen vorzugsweise mittels einer mechanischen Dickenmessung ergänzt, die man mit einer bekannten Dicken-Messlehre 41 vornimmt. Eine solche Messlehre kann beispielsweise aus einem Übertrager bestehen, an den obere und untere Tasterarme angeschlossen sind. In Durchlaufrichtung vor der Messzone werden eine oder auch mehrere Dickenmessvorrichtungen so angeordnet, dass jedes Werkstück zwischen zwei Tasterarmen hindurchläuft und diese entsprechend seiner Dicke auseinanderbewegt. Der Ausgang einer jeden Dickenmessvorrichtung 41 entspricht nur der maximalen Dicke des Werkstückes in der sich quer erstreckenden Zone, in der die Messung durchgeführt wird. Diese Messung dient zur Korrektur und zur Eichung der mittels der Laserstrahlen gewonnen Daten.

Nun erneut zu den ΔA- und ΔB-Signalen:

Die Auswertung der ΔA- und ΔB-Differenzsignale anstelle der A- und B-Signale selbst verhindert bestimmte Ungenauigkeiten, die bei älteren Abtastsystemen vorhanden waren (beispielsweise Fehler aufgrund einer Drift des Verstärkers 218), und gibt zusätzlich neue Möglichkeiten zum Gewinnen wichtiger Informationen, die bei älteren Systemen nicht zu erhalten waren. So sind bereits die ΔA- und ΔB-Differenzsignale, die von einem bestimmten Detektorelement kommen, bereits bezüglich dessen spezieller Ansprech-Charakteristik kompensiert und damit unmittelbar vergleichbar mit allen anderen ΔA- und ΔB-Signalen, die von allen anderen Detektorelementen kommen, und zwar unabhängig von deren speziellen dynamischen Ansprech-Charakteristiken. Demzufolge kann man aus den ΔA- und ΔB-Signalen Informationen gewinnen, die bei älteren Abtastsystemen nicht zu erhalten waren.

Die Werkstücke, für die die vorliegende Erfindung vor allem vorgesehen ist, haben abzutastende Oberflächen, die als diffuse Reflektoren anzusprechen sind. Aus diesem Grunde ist die von einem Pixel an der Oberfläche eines Werkstückes reflektierte Strahlungsintensität und demzufolge die Grösse des Differenzsignals ΔA- oder ΔB- von der Bestrahlung von solcher reflektierten Strahlung im wesentlichen abhängig von dem Einfallswinkel $\alpha$ (siehe Fig. 6) gegenüber einer Senkrechten auf das das Pixel enthaltende Oberflächenelement, auf das die reflektierte Strahlung auftrifft.

Wenn das Werkstück von der vorderen Lichtquelle 14 gemäss Fig. 6a bestrahlt wird, ist der Einfallswinkel $\alpha_1$ für die vordere Kantenfläche 12 klein gegenüber dem Einfallswinkel $\alpha_2$ der Strahlung auf die besägte horizontale Oberfläche 11. Unter der Annahme, dass die Oberflächen 11 und 12 in gleicher Weise reflektieren, wird das Differenzsignal ΔA, welches durch Reflexion der vorderen Schrägstrahlung von der Kantenfläche 12 herrührt, grösser als das Differenzsignal ΔA für irgendeinen Teil der gesägten Oberfläche 11 aufgrund des Unterschiedes zwischen den Winkeln $\alpha_1$ und $\alpha_2$ und ferner auch, weil eine grössere Fläche der vorderen Schrägfläche 12 im Ansprechfeld des Detektorelementes liegt wegen der Neigung dieser Kantenfläche. Der geringste ΔA-Signalwert von der vorderen Schrägbestrahlung ergibt sich an der hinteren Kantenfläche 13, an der der Einfallswinkel $\alpha_3$ den grössten Wert hat.

Bei der Bestrahlung von der hinteren Strahlungsquelle 14' sind die Grössendifferenzen für

die $\Delta$B-Signale verständlicherweise umgekehrt als bei den $\Delta$A-Signalen. In der Praxis sind im allgemeinen die Grössen eines $\Delta$A- oder $\Delta$B-Differenzsignals für eine bestrahlte Kantenfläche, beispielsweise die Kantenfläche 12 der Fig. 6a, etwa gleich der Grösse einer flachen gesägten Oberfläche, wie die Oberfläche 11, oder sie sind geringfügig kleiner, da eine schräge Kantenfläche ein geringeres Reflexionsvermögen hat als eine gesägte Oberfläche.

Aus den entsprechenden Grössen der $\Delta$A- und $\Delta$B-Signale für eine vorgegebene Überlappungsfläche lässt sich der Neigungswinkel $\beta$ der entsprechenden Überlappungsfläche (siehe Fig. 13) ermitteln aufgrund folgender Beziehung:

$$\beta = \text{arctg} \left[ - \cot g \; \alpha \; \left[ \frac{\Delta A - \Delta B}{\Delta A + \Delta B} \right] \right.$$

Die vorstehende Beziehung ist unabhängig von äusseren Faktoren, wie der Reflexionsfähigkeit der Überlappungsflächen und bestimmten Schwankungen der Strahlung aus den Strahlungsquellen 14 und 14'.

Es ist erkennbar, dass, falls man die Oberflächenneigung $\beta$ für jedes einzelne der zahlreichen Überlappungsflächen bestimmt, die sich auf einem Streifen 20 befinden, der sich quer zu dem mit einem Detektorelement abgetasteten Werkstück befindet, das Profil des Werkstückes entlang dieses Streifens durch solche Daten definiert wird, vorausgesetzt, dass diese Daten mit Breiten-Daten des Werkstückes an diesem Streifen und mit der maximalen Dicke entlang dieses Streifens kombiniert werden. Alle diese Informationen sind verständlicherweise mit einem Abtastsystem, das gemäss den Grundlagen dieser Erfindung arbeitet, entnehmbar.

Es gibt verschiedene Möglichkeiten, die $\Delta$A-, $\Delta$B-und $\Delta$L-Signale, die mit dem erfindungsgemässen Abtastsystem erhalten werden, zu verwenden, um eine Information über die Werkstücke zu erhalten.

Eine Möglichkeit liegt darin, die $\Delta$A- und $\Delta$B-Differenzsignale für eine Qualitätsaussage zu verwenden, d.h. für die Erfassung von Fehlerstellen an einem Werkstück. Nach dem bisherigen Stand der Technik war es bisher nicht möglich, sowohl eine qualitative Auswertung als auch eine geometrische Vermessung mit Daten nur eines Abtastvorganges durchzuführen, da die Menge der zu verarbeitenden Daten vermutlich die Möglichkeiten wirtschaftlich vertretbarer Einrichtungen überschreiten würde. Für eine qualitative Auswertung können die $\Delta$A- und $\Delta$B-Ausgänge, die in vorerwähnter Weise erzeugt werden, mit einem Schwellenwert verglichen werden, welcher Wert eines $\Delta$A- oder $\Delta$B-Signals entsprechen würde, das von einem Detektorelement kommt, falls dieses einen Oberflächenbereich von besonders kritischer Form, beispielsweise eine Schwartenfläche, einen Ast, ein Loch, einen Riss oder eine sonstige Oberflächenunregelmässigkeit «erblickt», die zu einer Verminderung des wirtschaftlichen Wertes führt. Den Schwellenwert kann man empirisch auswählen, je nach bestimmten Kriterien, die man für das Auswerteverfahren benutzen möchte. Auch kann man die $\Delta$A- und $\Delta$B-Differenzsignale in einen Speicher einlesen, der dem Speicher des Vor-Prozessrechners 29 entspricht. Durch Anwendung eines bekannten Schemenerkennungsverfahrens bezüglich der so gespeicherten Daten, ist es möglich, beachtliche Defekte am Werkstück und die Orte solcher Defekte zu erfassen, so dass man bearbeitende Sägeschnitte errechnen kann, um das Werkstück in ein Fertigerzeugnis zu verwandeln, das einen optimalen wirtschaftlichen Wert hat.

Da man die $\Delta$A- und $\Delta$B-Signale verwenden kann, um Informationen bezüglich der Oberflächenneigung $\beta$ und über Oberflächenfehler zu gewinnen, können mit den erfindungsgemäss gewonnenen Abtastdaten Aussagen erhalten werden, über das Mass der Oberflächenglätte, vorausgesetzt, dass für diesen Zweck geeignete kleine Pixel verwendet werden.

Die $\Delta$A- und $\Delta$B-Signale lassen sich auf verschiedene Weise auswerten, um die Geometrie eines Werkstückes zu bestimmen.

Ein weniger genaues und daher weniger erwünschtes Verfahren, das jedoch schneller und mit einem geringeren Aufwand durchführbar ist, zeigt die Fig. 6. In Fig. 6c und 6d sind die $\Delta$A- und $\Delta$B-Differenzsignale dargestellt, welche ein bestimmtes Detektorelement erzeugt, wenn dieses ein brettförmiges Werkstück abtastet. Die genannten Figuren zeigen die vergleichbaren Grössen dieser Signale, wenn das Detektorelement zunächst die vordere Kantenfläche 12, dann die gesägte Deckfläche 11 und dann die hintere Kantenfläche 13 abtastet. Da diese zwei Gruppen von Signalen nacheinander von ein und demselben Detektorelement kommen, erscheinen in Wirklichkeit die $\Delta$A- und $\Delta$B-Differenzsignalausgänge dieses Detektorelementes als Überlagerung von Fig. 6c und 6d. Die entsprechenden $\Delta$A- und $\Delta$B-Differenzsigale sind jedoch voneinander getrennt und ergeben nach einer digitalen Ausfilterung gefilterte Signale, wie sie die Fig. 6e und 6f zeigen. Wie Fig. 6f erkennen lässt, ermöglicht ein Vergleich der gefilterten Signale die Bestimmung von Werkstückdaten, wie Gesamtbreite $b_t$ des Werkstückes, Breite $b_p$ der gesägten Oberfläche 11 und Breiten $b_{vv}$ und $b_{vh}$ der entsprechenden Kantenflächen 12 und 13.

Alle diese Grössen werden für alle schmalen Streifen 20 gewonnen, die sich entsprechend der relativen Abtastbewegung der Detektorelemente quer über das Werkstück erstrecken. Die digitale Filterung führt zu einer Ausschaltung von störenden aussergewöhnlichen Messwerten, die beispielsweise durch Splitter u. dgl. verursacht sein können. Die digitale Filterung erleichtert ferner auch die Erfassung von merklichen Änderungen der Signalgrösse.

So erkennt man beispielsweise aus Fig. 6f eine plötzliche Änderung eines der gefilterten $\Delta$A- oder $\Delta$B-Differenzsignale von einer Signalgrösse, die über mehrere Messzyklen vorhanden war zu einer anderen Signalgrösse, die über mehrere Messzyklen bestand. Diese plötzliche Änderung kennzeichnet die Lage einer Kante zwischen zwei benachbarten Oberflächen eines Werkstückes.

Das vorstehend beschriebene Verfahren ist befriedigend zur Lokalisierung von Kanten an einem Werkstück, bei dem alle abgetasteten Oberflächen mehr oder weniger flach sind bei einer Genauigkeit, die verständlicherweise nicht besser sein kann als plus oder minus der Abstand, über den sich das Werkstück während eines Messzyklus bewegt.

Bei einem zu bevorzugenden und wesentlich genaueren Verfahren kann man Messungen an abgetasteten Oberflächen vornehmen, die nicht nur flach, sondern auch gekrümmt verlaufen können. Hierbei überlappen sich die Pixel, von denen die $\Delta$A- und $\Delta$B-Signale kommen, nicht nur während eines Messzyklus, sondern es ergibt sich auch noch eine Überlappung der Pixel mit den Pixeln im nachfolgenden Messzyklus. Hierzu wird verwiesen auf die Fig. 7, in der in jeder einer Folge von Messzyklen die Lage der Pixel 19, von denen die $\Delta$A- und $\Delta$B-Signale kommen, quer zum Werkstück dargestellt sind. Die Pixel aufeinanderfolgender Messzyklen sind mit entsprechenden Indizes benannt. Bei einer Vorrückgeschwindigkeit des Werkstückes von 4 mm je Messzyklus und einer Pixelfläche von 8 × 8 mm überlappen sich die $\Delta$A-Signalpixel aufeinanderfolgender Messzyklen um 4 mm, genauso wie dies für aufeinanderfolgende Zyklen für die $\Delta$B-Signale gilt. Ein Pixel, von dem ein $\Delta$A-Signal während eines vorgegebenen Messzyklus hergeleitet wird, überlappt im gleichen Zyklus ein $\Delta$A-Pixel um etwa 7 mm.

Wenn sich ein Werkstück auf die Messzone vorbewegt und dessen Vorderkante noch nicht das Pixel eines Detektorelementes erreicht hat, bleibt das $\Delta$A-Signal dieses Detektorelementes unterhalb eines Schwellenwertes, der, wie Fig. 7 zeigt, nur geringfügig oberhalb des normalen Störpegels liegt. Den Schwellenwert liefert die Software des Vor-Prozessrechners. Innerhalb des ersten Messzyklus, in dem das Werkstück in das Ansprechfeld eines Detektorelementes gelangt, ruht nur ein Teil des Pixels dieses Detektorelementes auf dem Werkstück. Aus diesem Grunde hat in diesem Messzyklus das $\Delta$A-Signal dieses Detektorelementes nur einen geringen Wert, der mit 81 bezeichnet ist, aber oberhalb des Störpegels liegt. Der Wert des $\Delta$A-Signals entspricht in etwa der Grösse der Werkstückfläche, soweit diese innerhalb des Pixels liegt. Das gleiche gilt auch für das $\Delta$B-Signal, falls die vordere Kantenfläche 12 so geneigt ist, dass sie die Strahlung der hinteren Strahlungsquelle 14' reflektiert. Während der nächsten ein oder zwei Messzyklen wird der $\Delta$A-(und $\Delta$B-)Pegel stetig grösser, wie es bei 82 eingezeichnet ist. Anschliessend erreicht der $\Delta$A-Pegel ein Plateau 83, wenn jedes von dem Detektorelement abgetastete Pixel vollständig an der vorderen Kantenfläche 12 liegt. Die Grösse des $\Delta$A-(und $\Delta$B-)Signals für das Plateau hängt von der Neigung und vom Reflexionsvermögen der schrägen Kantenfläche ab. Die in Fig. 7 oben dargestellten Kurven zeigen in ausgezogenen Linien

die Werte der $\Delta$A-Signale und in gestrichelten Linien die Werte der $\Delta$B-Signale für ein Werkstück mit einer rauhen schrägen Kantenfläche 12. Die in Fig. 7 unten dargestellten Kurven zeigen die entsprechenden Werte für das gleiche Werkstück unter der Annahme, dass die schräge Kantenfläche erheblich stärker reflektiert. Sobald die Pixel auf die gesägte flache Oberseite 11 des Werkstückes heraufaufen, ergibt sich erneut ein plötzlicher Anstieg des $\Delta$A-(und $\Delta$B-)Signalpegels auf einen neueren höheren Plateaupegel 84, der anschliessend bestehen bleibt, solange die Pixel vollständig Teile der Oberfläche 11 abdecken. Die $\Delta$A- und $\Delta$B-Signale fallen verständlicherweise schneller unter den Störpegelwert ab, wenn die Abtastung in den Teil des Werkstückes hineinläuft, der keinerlei Strahlung von der vorderen Strahlungsquelle 14 empfängt oder wie im Fall der Seitenfläche 13 nicht mehr im Ansprechfeld der Kamera liegt.

Die beim Werkstück 6 in Fig. 7 dargestellte relativ steile vordere Kantenfläche 12 wird von der hinteren Strahlungsquelle 14' nicht beleuchtet. Daher ändern sich die $\Delta$B-Signale von Messzyklus zu Messzyklus, wie es in den gestrichelten Kurven dargestellt ist. Diese Signale steigen erst dann über den Störpegel an, wenn die Abtastung auf die gesägte Oberseite 11 auftrifft. Anschliessend steigen die Signale plötzlich auf einen höheren Pegel, der beibehalten wird, bis die Abtastung die hintere Kantenfläche 13' des Werkstückes erreicht. Obwohl die Oberfläche 13' als gesägte und damit stark reflektierende Oberfläche dargestellt ist, liegt diese unter einem solchen Winkel, dass die Kamera von dort reflektierte Strahlung nicht empfangen kann. Wenn also die Abtastung die erwähnte Oberfläche überläuft, fällt das $\Delta$B-Signal plötzlich ab.

Aus Fig. 7 ist erkennbar, dass eine Werkstückkante selbst (beispielsweise eine Aussenkante) sich kenntlich macht durch eine mehr oder weniger stetige aber schnelle Änderung des $\Delta$A-Signals vom Störpegel bis zu einem Plateauwert, beziehungsweise beim $\Delta$B-Signal von einem Plateauwert zum Störpegel. Der exakte Ort einer Kante lässt sich mit guter Genauigkeit durch den Punkt bestimmen, an dem die steigende oder fallende Signalfolge die Hälfte des Plateauwertes erreicht, der neben der fraglichen Kante an der Werkstückoberfläche vorhanden ist. Eine solche Ortung einer Aussenkante durch den Punkt des Signalpegels, welcher dem halben Anstiegswert entspricht, gilt sowohl für eine Werkstückkante, die von einer gesägten Oberfläche (wie die Oberfläche 13' in Fig. 7) definiert ist, als auch für eine Kante, die eine unbearbeitete Schrägfläche bildet.

Zur Bestimmung einer inneren Werkstückkante (beispielsweise die Kante zwischen der schrägen Kantenfläche 12 und der Oberfläche 11 in Fig. 7) aus der Folge von $\Delta$A- und $\Delta$B-Signalen wird ein unterschiedliches Prinzip verwendet. Zu diesem Zweck wird für das während eines jeden Messzyklus gewonnene $\Delta$A- und $\Delta$B-Signalpaar der örtliche Neigungswinkel $\beta$ errechnet, um dann diesen Winkel oder eine Ableitung dieses Winkels mit einem bestimmten Grenzwert zu vergleichen. Die Innenkante liegt an dem Punkt, an dem der Winkel β oder dessen Ableitung den Grenzwert passiert und dann anschliessend für eine bestimmte Zeit auf einem Wert oberhalb des Grenzwertes bleibt.

Wie schon zuvor erwähnt, lassen sich die Parameter eines entlang der abgetasteten Oberfläche gekrümmten oder über einen erheblichen Teil dieser Oberfläche gekrümmten Werkstückes genau definieren aus den in vorerwähnter Weise bestimmten Orten der Aussenkanten des Werkstückes, aus den mit ΔL-Signalen und einer mechanischen Dicken-Lehre gewonnenen Dickendaten und aus den örtlichen Oberflächenneigungen in Längs- und Querrichtung des Werkstückes, welche aus den ΔA- und ΔB-Signalpaaren errechnet werden.

Es ist offensichtlich, dass man die Länge eines jeden Werkstückes leicht bestimmen kann aus den nach dem Prinzip dieser Erfindung gewonnenen Abtastdaten.

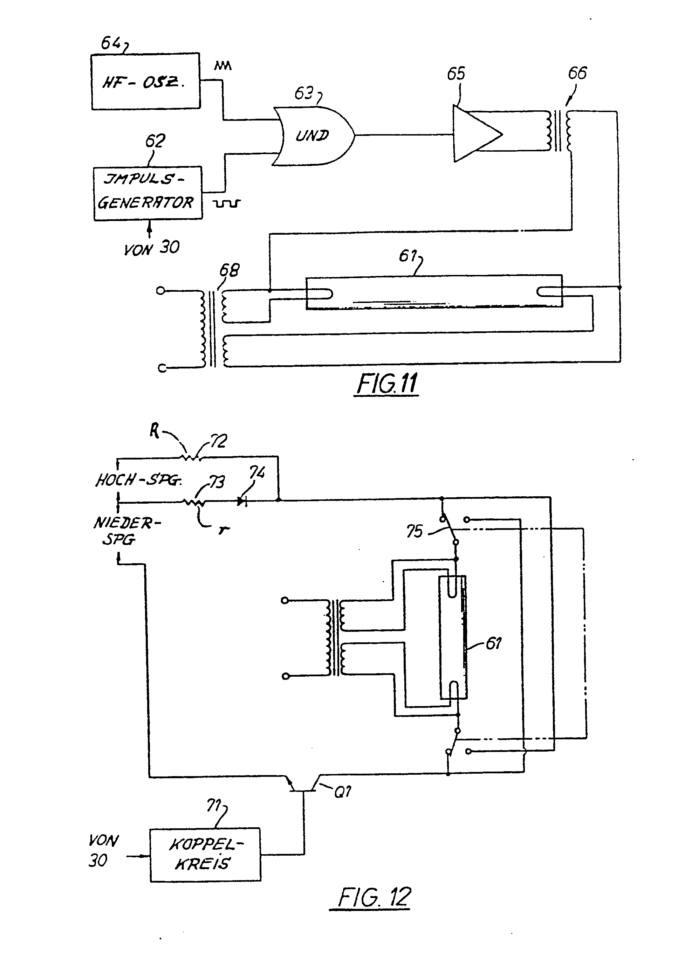

Es soll nun erläutert werden, wie die verschiedenen Detektorelemente der reflektierten Strahlung ausgesetzt werden, die von den Strahlungsquellen 14 und 14' zu genau festgelegten Zeitpunkten des Messzyklus kommt. Fig. 11 zeigt eine diesem Zwecke dienende Schaltungsanordnung.

Jede der Strahlungsquellen 14, 14' kann eine oder mehrere Gasentladungsröhren 61 enthalten. Unter Steuerung des Steuerkreises 30 überträgt ein Impulsgenerator 62 abwechselnd EINS-und NULL-Rechteckimpulse mit der Frequenz, mit der die Gasentladungsröhre 61 ein- und auszuschalten ist. Der Impulsgenerator 62, bei dem es sich um einen Schmittschen Kippkreis handeln kann, arbeitet beispielsweise mit einer Impulsfrequenz von etwa 250 Hz. Der Ausgang des Impulsgenerators 62 wird einem UND-Kreis 63 zugeführt, der auch einen Eingang von einem Hochfrequenz-Oszillator 64 empfängt, dessen Frequenz in der Grössenordnung von 20 bis 25 kHz liegt. Über den UND-Kreis 63 gelangt der Hochfrequenzausgang des Oszillators 64 für die Dauer eines EINS-Impulses aus dem Impulsgenerator 62 zu einem Verstärker 65. Dieser Verstärker 65 ist mit seinem Ausgang an die Primärwicklung eines Transformators 66 angeschlossen, bei dem die Sekundärspannung gross genug ist, um die Entladungsröhre 61 zu zünden. Der Transformator 66 begrenzt dabei den Strom durch die Entladungsröhre 61 auf einen geeigneten Wert, der jedoch etwas grösser sein kann als der Strom, den die Gasentladungsröhre aufnimmt, wenn sie mit ihrer normalen Betriebsspannung arbeitet, weil die Ströme nur in sehr kurzen Intervallen fliessen. Wenn es sich um eine Entladungsröhre handelt, die einen Glühfadenstrom benötigt, empfängt sie diesen Strom von einem Glühfadentransformator 68, der der Röhre 61 in bekannter Weise zugeordnet ist und aus dem Netz gespeist wird.

Während des NULL-Impulses des Impulsgenerators 62 hört die Entladung in der Röhre 61 verständlicherweise auf, so dass deren Strahlung schnell von der relativ hohen Strahlungsintensität, die zur Erzeugung eines A- oder eines B-Signals erforderlich ist, wieder abfällt. Aufgrund der Fluoreszenz der Gasentladungsröhre und der möglicherweise vorhandenen Umgebungshelligkeit, sinkt die das Werkstück treffende Strahlung auf die erheblich geringere Strahlungsintensität ab, die für das R-Signal benötigt wird.

Um die Strahlungsquellen 14, 14' alternativ einzuschalten sorgt der Steuerkreis 30 dafür, dass der Impulsgenerator 62 einer jeden Strahlungsquelle immer ein EINS-Signal erzeugt, wenn der Impulsgenerator der anderen Strahlungsquelle ein NULL-Signal abgibt. Die Frequenz, mit der die Strahlungsquellen 14, 14' abwechselnd eingeschaltet werden, liegt erheblich höher als die 20-Hz-Bildauflösungsfrequenz des menschlichen Auges, so dass man den Eindruck hat, als wären beide Strahlungsquellen ständig eingeschaltet. Aus diesem Grunde ergibt sich kein Blitz- oder Blinkeffekt wie er bei älteren Abtastsystemen vorhanden war.

Die Fig. 12 zeigt eine Schaltung, die man immer dann anwenden kann, wenn grössere Strahlungsintensitäten benötigt werden, d. h. wenn beispielsweise die Werkstücktransportgeschwindigkeiten so gewählt sind, dass die Verluste bei der Erregung einer Gasentladungsröhre mit hochfrequentem Wechselstrom die verfügbare Leistung beschränken.

Bei der Ausführungsform gemäss Fig. 12 wird jede der Gasentladungsröhren 61 mit Gleichstrom gespeist. Die Basis des Transistors $Q_1$ ist mit der Steuervorrichtung 30 über ein geeignetes elektronisches Koppelgerät 71 verbunden, das den Transistor zu den Zeiten leitend macht, wenn die Entladungsröhre 61 zu strahlen hat. Im leitenden Zustand verbindet der Transistor $Q_1$ die Entladungsröhre 61 mit einer Zündspannungsquelle von hoher Spannung über einen Strombegrenzungswiderstand 72 von grosser Impedanz. Nach der Zündung, wenn die Impedanz der Entladungsröhre 61 sich plötzlich stark vermindert, empfängt die Entladungsröhre den Strom aus einer Niederspannungsquelle über einen strombegrenzenden Reihenwiderstand 73. Eine mit dem Widerstand 73 in Reihe geschaltete Diode 74 verhindert eine Überbrückung des Hochspannungskreises über den Widerstand 73. Ein Polwechsler 75 sorgt beispielsweise für jeden folgenden Messzyklus für eine periodische Umkehr der Stromrichtung, um eine Schwärzung der Röhre zu verhindern.

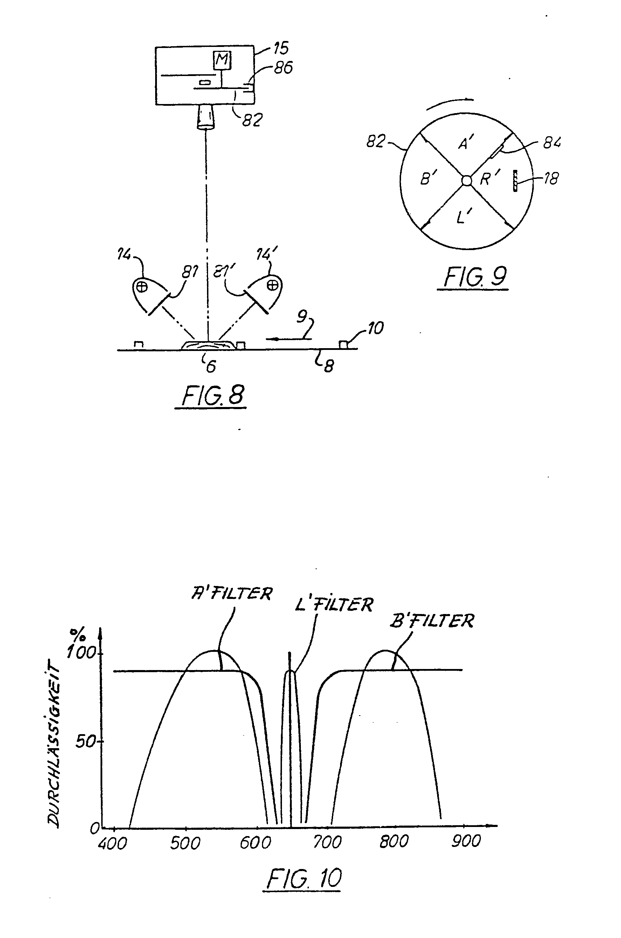

Die schematisch in Fig. 8 dargestellte Anordnung gibt die Möglichkeit, beide Strahlungsquellen 14 und 14' stetig strahlen zu lassen, ohne dabei zu verhindern, dass jedes der photosensitiven Detektorelemente abwechselnd Impulsen der reflektierten Strahlung einer jeden der Strahlungsquellen ausgesetzt wird, um in richtiger Folge A- und B-Signale zu erzeugen. In einem solchen Falle sorgen an den entsprechenden Strahlungsquellen 14, 14' vorgesehene Filter 81, 81' dafür, dass die Strahlung aus der vorderen Strahlungsquelle 14 mit einer Wellenlänge strahlt, die erheblich von der Wellenlänge der Strahlung aus der hinteren Strahlungsquelle 14' abweicht. Vorzugsweise unterscheiden sich – wie Fig. 10 zeigt – die Wellenlängen der Strahlungsquellen 14 und 14' nicht nur erheblich voneinander, sondern auch von der monochromatischen Strahlung der Laser 27. An der Linse oder dem Linsensystem einer jeden Array-Kamera 15 befindet sich eine rotierende Filterscheibe 82 mit vier Filterelementen A', B', L' und R', die der Reihe nach auf das optische System ausgerichtet werden, wenn die Scheibe 82 umläuft. Das Filterelement A' leitet nur die Strahlung mit der Wellenlänge weiter, die von der vorderen Strahlungsquelle 14 kommt. Das Filterelement B' leitet nur die Strahlung weiter, die von der hinteren Strahlungsquelle 14' kommt, und das Filterelement L' lässt nur die Laser-Strahlung durch. Das Filterelement R' ist undurchsichtig und sorgt somit für ein R-Signal mit dem Werte Null zur Normalisierung der A-, B- und L-Signale bezüglich der Drift des Verstärkers oder ähnlicher Einflüsse. An der Filterscheibe befindet sich Steuerstreifen 84 für die Synchronisierung der Belichtung des Detektor-Arrays. Die jeweilige Lage des Steuerstreifens 84 wird mit einem gabelförmigen optischen Lesekopf 86 erfasst, dessen Ausgänge dem Steuerkreis 30 zugeführt werden, damit dessen Impulsausgänge zu den richtigen Zeiten erscheinen, um den Addierer 35 und andere synchronisierte Teile der Signalverarbeitungsschaltung 28 zu steuern. Die verschiedenen Detektorelemente liefern nun die gleichen Ausgänge wie beim pulsierenden Betrieb der verschiedenen Strahlungsquellen, so dass die Signalverarbeitungsschaltung im wesentlichen genau so ausgebildet sein kann, wie es zuvor beschrieben wurde.

Da Rohbretter und ähnliche Werkstücke normalerweise so durch die Messzone 7 hindurchlaufen, dass ihre schmäleren gesägten Oberflächen 11 nach oben zeigen, erfolgen bei der soweit beschriebenen Vorrichtung keinerlei Messungen an der breiteren gesägten Bodenfläche solcher Werkstücke. Um eine vollständige und genau definierte Berechnung der Geometrie der Werkstücke durchzuführen, kann man jedoch die Werkstücke nach dem Durchlauf durch die Messzone 7 umdrehen und sie noch einmal durch die gleiche Messzone hindurchschicken, damit eine zweite Abtastung vorgenommen werden kann. Verständlicherweise ist es auch möglich, eine zweite ähnlich ausgebildete Messzone zusätzlich vorzusehen. Abweichend von der beschriebenen Ausführungsform lässt sich aber auch die Messzone 7 so ausbilden, dass sie sowohl den Bereich oberhalb als auch den Bereich unterhalb der Werkstücke berücksichtigt. In diesem Falle werden dann unter der Messzone auch noch Strahlungsquellen angeordnet, die die Strahlung schräg zu den Bodenflächen der Werkstücke nach oben richten und mit nach oben gerichteten abtastenden Array-Kameras zusammen arbeiten.

Es sei noch erwähnt, dass das erfindungsgemässe Verfahren auch die Möglichkeit gibt, so zu arbeiten, dass die Werkstücke in der Messzone 7 stationär gehalten werden, wenn man die Relativbewegung zwischen jedem einzelnen Werkstück und dem photosensitiven Detektor-Array dadurch erzeugt, dass man die Array-Kameras 15 bewegt oder Schwenkspiegel vorsieht, wie dies in den US-PS 3 886 372 und 3 963 938 beschrieben ist. Verständlicherweise kommt die bemerkenswert hohe Verarbeitungsgeschwindigkeit, die die vorliegende Erfindung ermöglicht, nicht voll zum Tragen, wenn die Werkstücke bei der Abtastung stationär gehalten werden, obwohl alle anderen Vorteile der Erfindung erhalten bleiben.

Aus der vorstehenden Beschreibung und den beigefügten Zeichnungen ist erkennbar, dass die Erfindung die Möglichkeit gibt, an länglichen Werkstücken unregelmässiger Gestalt äusserst schnelle und sehr genaue Messungen vorzunehmen und Informationen zu gewinnen, die man in eine automatische Datenverarbeitungsvorrichtung eingeben kann, um das Profil oder die allgemeine Gestalt des Werkstückes zu errechnen, wenn an den Werkstücken besäumende Schnitte vorgenommen werden sollen, damit aus dem Roh-Werkstück ein Fertigerzeugnis von optimalem wirtschaftlichen Wert wird.

**Patentansprüche**

1. Verfahren zum photoelektrischen Abtasten und Vermessen unregelmässiger Werkstücke, wie Bretter u.dgl., die einzeln nacheinander in einer Messzone an mindestens einer Seite den Strahlungen von zwei bezüglich einer sich durch die Messzone erstreckenden Ebene einander gegenüberliegend angeordneten Strahlungsquellen ausgesetzt und mit einer Mehrzahl von in einer Array-Kamera zusammengefassten, mit ihren optischen Achsen in der vorerwähnten Ebene liegenden photosensitiven Detektorelementen, abgetastet werden, welche ein bezüglich ihrer optischen Achsen auf kleine Divergenzwinkel beschränktes Anpsrechfeld haben und aufgrund der sich dort an einem Oberflächenelement ergebenden Strahlungsreflexionen entsprechende elektrische Signale erzeugen, aus denen sich die gewünschten Messdaten des Werkstückes ergeben, dadurch gekennzeichnet, dass die Relativbewegung zwischen den Detektorelementen und dem Werkstück oder die Belichtungszeit, in der alle vom Werkstück angesprochenen Detektorelemente einer von beiden Strahlungsquellen kommenden und vom Werkstück reflektierten Strahlung ausgesetzt sind, derart gesteuert werden, dass diese Detektorelemente während eines kurzen Zeitintervalls Reflexionen vom gleichen kleinen Oberflächenelement des Werkstückes empfangen, und zwar zunächst von der einen und dann von der anderen Strahlungsquelle, so dass die Detektorelemente für jedes der Zeitintervalle aufgrund der zwei abwechselnd einwirkenden Strahlungsquellen zwei getrennte Messsignale erzeugen, wodurch mit Hilfe der zwei getrennten Messsignale die Neigungswinkel der kleinen Oberflächenelemente des Werkstückes bezüglich der genannten Ebene bestimmt werden können.

2. Verfahren nach Anspruch 1, dadurch gekennzeichnet, dass in jedem Messzyklus die Strahlungsintensität der zwei Strahlungsquellen in schneller Folge periodisch zwischen einem niedrigen (R) und einem hohen Wert (A, B) verändert wird, so dass die Detektorelemente entsprechend dem zeitlichen Wechsel der Strahlung in zyklischer Folge zwei im wesentlichen ein und dasselbe Oberflächenelement des Werkstückes betreffende, von beiden Strahlungsquellen verursachte Messsignalpaare erzeugen, und dass bei jedem Messsignalpaar das der niedrigen Intensität entsprechende Signal von dem der hohen Intensität entsprechenden Signal abgezogen wird und zwei Differenz-Signale erzeugt werden, die miteinander und mit an anderer Stelle und zu anderen Zeiten in dieser Weise erzeugten Differenz-Signalen verglichen werden.

3. Verfahren nach Anspruch 2, dadurch gekennzeichnet, dass der niedrige Wert (R) der Strahlungsintensität durch eine stetige zusätzliche Strahlung auf einem vorbestimmten, im wesentlichen konstanten Bezugswert gehalten wird.

4. Verfahren nach Anspruch 1 bis 3, dadurch gekennzeichnet, dass die Strahlungsquellen intermittierend ein- und ausgeschaltet werden.

5. Verfahren nach Anspruch 1 bis 3, dadurch gekennzeichnet, dass zwei mit unterschiedlicher Wellenlänge strahlende Strahlungsquellen permanent eingeschaltet bleiben und ihre Strahlung mit periodisch betätigten Filtern wechselweise blockiert wird.

6. Verfahren nach Anspruch 1 bis 5, dadurch gekennzeichnet, dass in einem zusätzlichen Intervall des Messzyklus auf die im Ansprechfeld der Detektorelemente liegende Werkstückoberfläche ein schräg einfallender gebündelter Strahl einer zusätzlichen Strahlungsquelle gerichtet wird, um einen Strahlungsfleck zu erzeugen, der von einem oder mehreren Detektorelementen der Array-Kamera erfassbar ist und ein der Dicke des Werkstückes entsprechendes Dicken-Signal liefert.

7. Verfahren nach Anspruch 6, dadurch gekennzeichnet, dass im Falle der Erfassung des Strahlungsflecks in den Ansprechfeldern mehrerer benachbarter Detektorelemente ein Schwellwert-Signal vorbestimmter Grösse erzeugt und von den bei der Dickenmessung gewonnenen Ausgangssignalen abgezogen wird, um die unterhalb des Schwellwert-Signals liegenden Ausgangssignale zu verwerfen.

8. Verfahren nach Anspruch 1 bis 7, dadurch gekennzeichnet, dass in Abhängigkeit von der Werkstückbewegung um eine vorbestimmte Weglänge ein Lage-Impuls-Signal erzeugt wird, um in jedem Messzyklus die erzeugten Messsignale einer bestimmten Werkstücklage zuordnen zu können.

9. Vorrichtung zum photoelektrischen Abtasten und Vermessen unregelmässiger Werkstücke bestehend aus einer Messzone, einem die abzutastenden Werkstücke durch die Messzone bewegenden Förderer, zwei an gegenüberliegenden Seiten der Messzone angeordneten wechselweise einwirkenden Strahlungsquellen, einer Mehrzahl von in einer Array-Kamera zusammengefassten, elektrische Signale erzeugenden Detektorelementen, die ein bezüglich ihrer in einer sich durch die Messzone erstreckenden Ebene liegenden optischen Achsen auf kleine Divergenzwinkel beschränktes Ansprechfeld ausweisen, zum Empfang von Strahlungsreflexionen von kleinen, durch die Messzone bewegten Werkstück-Oberflächenelementen und einer Schaltungsanordnung zum Umsetzen der elektrischen Signale in erwünschte Messdaten der abgetasteten Werkstückseite, gekennzeichnet durch eine Steuerschaltung (30), die die beiden Strahlungsquellen (14, 14') wechselweise in regelmässig aufeinanderfolgenden Zyklen jeweils zwischen niedriger und hoher Strahlungsintensität umschaltet, so dass die Detektorelemente (18) synchron zum Bestrahlungswechsel je ein Messsignal R für die geringe Strahlungsintensität und Messsignale A und B für die hohe Strahlungsintensität erzeugen, einen mit den Detektorelementen (18) verbundenen Kurzzeitspeicher (34), einen die von den Detektorelementen (18) kommenden A-, B- und R-Signale empfangenden Addierer (35), der von den A- und B-Signalen das R-Signal abzieht und Differenz-Signale ΔA und ΔB erzeugt, wobei die Werkstückbewegung so gesteuert ist, dass in einem Messzyklus die A- und B-Signale auf Reflexionen an Werkstück-Oberflächenelementen basieren, die einander in einem örtlichen Bereich überlappen.

10. Vorrichtung nach Anspruch 9, dadurch gekennzeichnet, dass in der gemeinsamen Ebene (115) der optischen Achsen der Detektorelemente (18) schräg zur abzutastenden Werkstückoberfläche ein Laser (27) angeordnet ist, der auf der Werkstückoberfläche einen Strahlungsfleck (127) erzeugt, und dass für den Laser (27) eine Erregerschaltung vorgesehen ist, die den Laser (27) in jedem Messzyklus zu einer Zeit erregt, wenn weder ein A-, noch ein B- oder R-Ausgangssignal erzeugt wird, sondern nur ein L-Ausgangssignal des Lasers (27), welches mindestens an einem der Detektorelemente (18) entsteht.

**Claims**

1. A method for photo-electric scanning and measuring irregularly shaped workpieces, such as planks and the like, which are irradiated one by one in a measuring zone on at least one face by two radiation sources arranged on opposite sides of a plane which extends along the measuring zone, and which workpieces are scanned by a plurality of photo-sensitive detector elements which are disposed in an array camera, have their optical axes along said plane, have a response field limited to small angles of divergence from the optical axis and generate electrical signals which are dependent upon the radiation reflected from a small surface area on the workpiece and from which the desired measurement data about the workpiece are obtained, characterized in that the relative movement between the detector elements and the workpiece, or the time of irradiation during which all the responding detector elements are exposed to radiation which originates from both radiation sources and is reflected from the workpiece, is so controlled, that these detector elements during a short time interval receive reflections from the same small surface area on the workpiece, first from one of the radiation sources and thereafter from the other, so that the detector elements, due to the alternating effect of the two radiation sources, generate two discrete measurement signals for each time interval, whereby the angle of inclination of the small surface areas on the workpiece can be determined by means of the two discret measurement signals.

2. The method of claim 1, characterized in that the radiation intensity of the two radiation sources is rapidly and periodically shifting during each measurement cycle between a low value (R) and a high value (A, B), so that the detector elements in response to this alternation in time of the radiation successively generate two pairs of measurement signals which substantially relate to one and the same small surface area and originate from both the radiation sources, and that for each pair of measurement signals the signal which corresponds to the low intensity is subtracted from the high intensity signal, to produce two difference signals which are comparable with one another and with difference signals produced in the same way at other times.

3. The method of claim 2, characterized in that the low radiation intensity value (R) is held on a substantially constant reference value by a steady supplementary radiation.

4. The method of claim 1 to 3, characterized in that the radiation sources are energized intermittently.

5. The method of claim 1 to 3, characterized in that two radiation sources having different wavelengths are steadily energized and the radiation therefrom alternately blocked by periodically operated filters.

6. The method of claim 1 to 5, characterized in that during a further time interval of the measurement cycle, a beam of radiation, obliquely incident to the face of the workpiece which is in the response fields of the detector elements, is emitted from a supplementary radiation source, to produce a spot of radiation which can be detected by one or more of the detector elements of the array camera and gives rise to a thickness signal corresponding to the local thickness of the workpiece.

7. The method of claim 6, characterized in that, in case the detected spot of radiation appears within the response fields of several adjacent detector elements, a threshold signal of a predetermined magnitude is produced and subtracted from the output produced at the thickness measurement, to discard the outputs which are lower than the threshold value signal.

8. The method of claim 1 to 7, characterized in that a position pulse signal is issued each time the workpiece advances through a predetermined distance, to correlate for each measurement cycle the measurement signals obtained therein to a determined position of the workpiece.

9. A device for photo-electric scanning and measuring irregularly shaped workpieces, comprising a measuring zone, a conveyor for moving the workpieces to be scanned through the measuring zone, two radiation sources which are located on opposite sides of the measuring zone and operate alternately, a plurality of detector elements which are disposed in an array camera and generate electrical signals and which have a response field limited to small angles of divergence from their optical axes, which lie in a plane extending along the measuring zone, for receiving radiation reflections from small surface areas on the workpiece as it moves through the measuring zone, and means for converting the electrical signals into desired measurement data about the scanned workpiece face, characterized by a control unit (30) which causes the two radiation sources (14, 14¹) to alternate, in each of a regular succession of cycles, between a low and a high radiation intensity, so that the detector elements (18) synchronously with the alternation of the radiation generate a measurement signal R which applies to the low radiation intensity and measurement signals A and B which apply to the high radiation intensity, a short-term memory (34) operatively connected to the detector elements (18), an adder (35) which receives the A-, B- and R-signals issued from the detector elements (18) and which subtracts the R-signal from the A- and B-signals and produce difference signals $\Delta A$ and $\Delta B$, wherein the movement of the workpiece is so controlled, that the A- and B-signals for a measurement cycle are produced in response to reflections from surface areas of the workpiece which substantially overlap one another in a local area.

10. The device of claim 9, characterized in that in a plane (115) which is common to the optical axes of the detector elements (18) a laser (27) is arranged obliquely to the face of the workpiece to be measured, for producing a spot of radiation (127) on the said face, and that there is means for energizing the laser (27) at a time during each measuring cycle when neither an A- nor a B- nor an R-output signal is being produced, but due to the laser (27) only an L-output signal is produced which signal is produced by at least one of the detector elements (18).

**Revendications**

1. Procédé pour l'exploration photo-électrique et la mesure de pièces irrégulières, comme des planches et pièces semblables, qui reçoivent séparément et successivement dans une zone de mesure, au moins d'un côté, des rayons produits par deux sources de rayonnement, disposées l'une en regard de l'autre par rapport à un plan s'étendant au travers de la zone de mesure, et qui sont explorées à l'aide de plusieurs éléments détecteurs photosensibles réunis dans une caméra à réseau et dont les axes optiques sont placés dans le plan précité, ces éléments détecteurs ayant un champ de réaction limité à un petit angle de divergence par rapport à leurs axes optiques et engendrant, en correspondance aux réflexions de rayonnement se produisant sur un élément de surface, des signaux électriques à partir desquels on obtient les données désirées de mesure de la pièce, procédé caractérisé en ce qu'il consiste à commander le mouvement relatif entre les éléments détecteurs et la pièce, ou bien le temps d'exposition pendant lequel tous les éléments détecteurs sollicités par la pièce sont soumis à un rayonnement provenant des deux sources et réfléchi par la pièce, de telle sorte que ces éléments détecteurs reçoivent pendant un court intervalle de temps des réflexions produites par le même petit élément de surface de la pièce, à savoir sous l'action d'abord d'une source de rayonnement puis de l'autre, afin que les éléments détecteurs engendrent, dans chaque intervalle de temps et en fonction des deux sources de rayonnement agissant alternativement, deux signaux de mesure séparés qui permettent de déterminer l'angle d'inclinaison des petits éléments de surface de la pièce par rapport au plan précité.

2. Procédé selon la revendication 1, caractérisé en ce que, dans chaque cycle de mesure, l'intensité de rayonnement des deux sources de rayonnement est modifiée périodiquement et suivant une séquence rapide entre une valeur faible (R) et une valeur élevée (A, B) de sorte que les éléments détecteurs produisent, en correspondance à l'aternance temporelle du rayonnement suivant une séquence cyclique, deux paires de signaux de mesure correspondant essentiellement au même élément de surface de la pièce et engendrées par les deux sources de rayonnement, et en ce que, pour chaque paire de signaux de mesure, le signal correspondant à la faible intensité est dérivé du signal correspondant à la grande intensité et il se produit deux signaux de différence qui seront comparés l'un avec l'autre et avec des signaux de différence engendrés de cette manière en un autre endroit et à d'autres moments.

3. Procédé selon la revendication 2, caractérisé en ce que la valeur faible (R) de l'intensité de rayonnement est maintenue par un rayonnement additionnel constant à une valeur de référence prédéterminée et essentiellement constante.

4. Procédé selon l'une quelconque des revendications 1 à 3, caractérisé en ce que les sources de rayonnement sont enclenchées et arrêtées par intermittence.

5. Procédé selon l'une quelconque des revendications 1 à 3, caractérisé en ce que deux sources de rayonnement produisant des rayonnements de longueurs d'ondes différentes restent enclenchées en permanence et en ce que leur rayonnement est alternativement bloqué à l'aide de filtres actionnés périodiquement.

6. Procédé selon l'une quelconque des revendications 1 à 5, caractérisé en ce que, dans un intervalle additionnel du cycle de mesure, un faisceau de rayonnement provenant d'une source additionnelle et orienté en oblique est dirigé sur la surface de pièce se trouvant dans le champ de réaction des éléments détecteurs de façon à produire un spot de rayonnement qui peut être capté par un ou plusieurs éléments détecteurs de la caméra à réseau et qui fournit un signal d'épaisseur correspondant à l'épaisseur de la pièce.

7. Procédé selon la revendication 6, caractérisé en ce que, dans le cas du captage du spot de rayonnement dans les champs de réaction de plusieurs éléments détecteurs adjacents, il se produit un signal de valeur de seuil d'une grandeur prédéterminée et, qui résulte des signaux de sortie obtenus lors de la mesure d'épaisseur, afin de rejeter les signaux de sortie situés en dessous du signal de valeur de seuil.

8. Procédé selon l'une quelconque des revendications 1 à 7, caractérisé en ce que, en fonction d'une course prédéterminée de déplacement de la pièce, un signal pulsatoire de position est produit de façon à pouvoir associer, dans chaque cycle de mesure, les signaux de mesure produits à une position déterminée de la pièce.

9. Dispositif pour l'exploration photo-électrique et la mesure de pièces irrégulières, comprenant une zone de mesure, un transporteur déplaçant les pièces à explorer au travers de la zone de mesure, deux sources de rayonnement disposées sur des côtés opposés de la zone de mesure et agissant alternativement, plusieurs éléments détecteurs réunis dans une caméra à réseau et produisant des signaux électriques, ces éléments détecteurs comportant un champ de réaction qui est limité à un petit angle de divergence par rapport à leurs axes optiques situés dans un plan d'étendant au travers de la zone de mesure, en vue de la réception de réflexions de rayonnements provenant de petits éléments de surface de la pièce qui sont déplacés au travers de la zone de mesure, ainsi qu'un circuit de conversion des signaux élctriques en données de mesure désirées pour le côté exploré de la pièce, caractérisé en ce qu'il est prévu un circuit de commande (30), qui fait commuter les deux sources de rayonnement (14, 14'), alternativement dans des cycles se succédant régulièrement, respectivement entre une faible intensité et une grande intensité de rayonnement de manière que les éléments détecteurs (18) produisent, en synchronisme avec l'alternance d'irradiation, respectivement un signal de mesure R pour la faible intensité de rayonnement et des signaux de mesure A et B pour la grande intensité de rayonnement, une mémoire de courte durée (34) reliée aux éléments détecteurs (18), un sommateur (35) recevant les signaux A, B et R provenant des éléments détecteurs (18), ce sommateur engendrant à partir des signaux A et B le signal R et produisant des signaux de différence $\Delta A$ et $\Delta B$, le mouvement de la pièce étant commandé de telle sorte que, dans un cycle de mesure, les signaux A et B soient basés sur des réflexions sur des éléments de surface de la pièce qui se recouvrent mutuellement dans une zone localisée en étant très proches.

10. Dispositif selon la revendication 9, caractérisé en ce qu'il est prévu, dans le plan comun (115) des axes optiques des éléments détecteurs (18), un laser (27) incliné par rapport à la surface de pièce à explorer et qui produit un spot de rayonnement (127) sur la surface de pièce et en ce qu'il est prévu pour le laser (27) un circuit d'excitation qui excite le laser (27), pendant chaque cycle de mesure, à un instant où il ne se produit ni un signal de sortie A ni un signal de sortie B ou R mais où il se produit seulement un signal de sortie L du laser (27) qui est appliqué au moins à un des éléments détecteurs (18).

FIG.1

*FIG.2*

$\Delta T = f(\Delta L)$

*FIG.4*

*FIG.3*

_FIG. 5_

23

FIG. 6

_FIG. 7_

FIG.8

FIG. 9

FIG. 10

64
HF - OSZ.

62
IMPULS-
GENERATOR

VON 30

63
UND

65

66

68

61

FIG.11

R
72
HOCH-SPG.
73
74
NIEDER-
SPG
r

75

61

Q1

71
VON
30
KOPPEL-
KREIS

FIG. 12

*FIG. 13*

*FIG. 14*